(19) Europäisches Patentamt
European Patent Office
Office européen des brevets

(11) Veröffentlichungsnummer: **0 271 444 B1**

# (12) EUROPÄISCHE PATENTSCHRIFT

(45) Veröffentlichungstag der Patentschrift: **28.04.93**

(51) Int. Cl.$^5$: **C09B 33/02**, C09B 43/28, D06P 1/18

(21) Anmeldenummer: **87810715.0**

(22) Anmeldetag: **03.12.87**

## (54) Dispersionsfarbstoffe.

(30) Priorität: **09.12.86 CH 4908/86**

(43) Veröffentlichungstag der Anmeldung:
**15.06.88 Patentblatt 88/24**

(45) Bekanntmachung des Hinweises auf die Patenterteilung:
**28.04.93 Patentblatt 93/17**

(84) Benannte Vertragsstaaten:
**BE CH DE FR GB IT LI**

(56) Entgegenhaltungen:
**FR-A- 1 367 748**

(73) Patentinhaber: **CIBA-GEIGY AG**
**Klybeckstrasse 141**
**CH-4002 Basel(CH)**

(72) Erfinder: **Della Casa, Angelo**
**Gerstenweg 66**
**CH-4125 Riehen(CH)**
Erfinder: **Liechti, Peter, Dr.**
**Alte Olsbergerstrasse 17**
**CH-4422 Arisdorf(CH)**
Erfinder: **Dempfle, Max**
**Flughafenstrasse 4/3**
**CH-4056 Basle(CH)**

EP 0 271 444 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf Dispersionsfarbstoffe, Verfahren zu deren Herstellung sowie deren Verwendung zum Färben von synthetischem organischem Material.

Die erfindungsgemässen Farbstoffe entsprechen der Formel

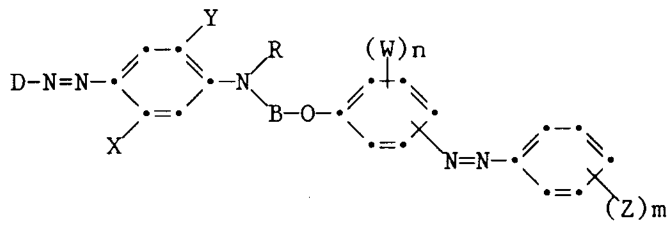

(1)

worin

- D den Rest einer homocyclischen oder heterocyclischen Diazokomponente aus der Reihe Thienyl, Thiazolyl, Isothiazolyl, 1,2,4-Thiadiazolyl, 1,3,4-Thiadiazolyl, Benzthiazolyl, Benzisothiazolyl, Pyrazolyl, Imidazolyl oder Phenyl bedeutet, wobei diese Diazokomponenten substituiert sein können durch Alkyl, Alkoxy oder Alkylthio mit je 1 bis 4 Kohlenstoffatomen, Phenyl, Halogen, Trifluormethyl, Cyano, Nitro, Acyl, Benzoyl, Carboalkoxy, Alkylsulfon mit 1 bis 4 Kohlenstoffatomen, Phenylsulfon, Phenoxysulfon, Sulfonamid oder Arylazo, oder wobei je 2 benachbarte Substituenten der genannten Ringsysteme auch zusammen weitere ankondensierte Ringe bilden können,
- X Wasserstoff, $C_1$-$C_4$-Alkyl, $C_1$-$C_4$-Alkoxy, Acylamino, Halogen oder eine Gruppe der Formel -NH-CO-NHQ, worin Q Wasserstoff, $C_1$-$C_4$-Alkyl oder Phenyl ist,
- Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy,
- R Wasserstoff, $C_1$-$C_{12}$-Alkyl, $C_2$-$C_{12}$-Alkenyl oder Phenyl, oder Y und R, zusammen mit dem Stickstoffatom und den beiden sie verbindenden C-Atomen, einen 5- oder 6-Ring bilden,
- B einen geradkettigen oder verzweigten $C_2$-$C_6$-Alkylenrest,
- W Halogen, $C_1$-$C_4$-Alkyl oder $C_1$-$C_4$-Alkoxy,
- Z Halogen, $C_1$-$C_4$-Alkyl, $C_1$-$C_4$-Alkoxy oder Nitro und
- m und n jeweils 0, 1, 2 oder 3 bedeuten.

D bildet den Rest einer homo- oder heterocyclischen Diazokomponente aus der Reihe Thienyl, Thiazolyl, Isothiazolyl, 1,2,4-Thiadiazolyl, 1,3,4-Thiadiazolyl, Benzthiazolyl, Benzisothiazolyl, Pyrazolyl, Imidazolyl, oder Phenyl. Jedes dieser Systeme kann weitere Substituenten tragen wie Alkyl, Alkoxy oder Alkylthio mit je 1 bis 4 Kohlenstoffatomen, Phenyl, elektronegative Gruppen wie Halogen, besonders Chlor oder Brom, Trifluormethyl, Cyano, Nitro, Acyl, Benzoyl, Carboalkoxy, besonders Carbomethoxy oder Carboethoxy, Alkylsulfon mit 1 bis 4 Kohlenstoffatomen, Phenylsulfon, Phenoxysulfon, Sulfonamid oder Arylazo, insbesondere Phenylazo. Je 2 benachbarte Substituenten der genannten Ringsysteme können auch zusammen weitere ankondensierte Ringe bilden, z.B. Phenylringe oder cyclische Imide.

Vorzugsweise bedeutet D einen Benzthiazolyl- oder Phenylrest, welcher unsubstituiert oder ein- oder zweimal durch einen der obengenannten Reste substituiert ist.

Als Benzthiazolylrest stellt D vor allem einen unsubstituierten oder einen ein- oder mehrmals durch Methyl, Methoxy, Chlor, Methylsulfon oder Nitro substituierten Benzthiazolylrest dar.

Die bevorzugte Bedeutung von D ist Phenyl, welches maximal mit 4, gegebenenfalls verschiedenen Substituenten aus der oben genannten Aufzählung substituiert ist. Von den aufgezählten Substituenten sind elektronegative bevorzugt. Diese können vor allem Cyano, Methyl-oder Ethylsulfonyl, Nitro, Chlor, Brom, Formyl, Acetyl, Benzoyl, Carbomethoxy, Carboethoxy, Methoxy, Ethoxy oder Phenylazo sein.

Unter Alkylgruppen sind in dieser Anmeldung generell geradkettige oder verzweigte Alkylgruppen zu verstehen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, n-Nonyl, Isononyl, Decyl, Dodecyl, Cyclopentyl, Cyclohexyl, Methylcyclohexyl sowie die dazugehörenden Isomeren.

Diese Alkylreste können substituiert sein, z.B. durch Hydroxy, Alkoxy mit 1 bis 4 Kohlenstoffatomen, insbesondere Methoxy, Cyano oder Phenyl. Als weitere Substituenten sind geeignet Halogen, wie Fluor,

Chlor oder Brom, oder -CO-U oder -O-CO-U, worin U Alkyl mit 1 bis 6 Kohlenstoffatomen oder Phenyl ist.

Als Alkenylreste kommen solche Reste in Betracht, welche sich von den oben aufgeführten Alkylresten durch Ersatz mindestens einer Einfachbindung durch eine Doppelbindung ableiten. Geeignete Reste sind z.B. Ethenyl oder Propenyl.

Geeignete Alkoxyreste sind z.B. Methoxy, Ethoxy, Propoxy, iso-Propoxy, n-Butoxy, i-Butoxy oder tert.-Butoxy.

Beispiel für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl, 2-Hydroxyethoxypentyl, Cyanethyl, Hydroxyethyl oder Acetoxyethyl.

Auch die Alkylenreste B können geradkettig oder verzweigt oder auch substituiert sein. Es kommen z.B. Ethylen, 1,3-Propylen, 1,5-Pentylen, 1,2-Propylen, 1,2-Butylen, 1,6-Hexylen, 2-Hydroxy-1,3-propylen oder 2-Chlor-1,3-propylen in Frage.

Falls X eine Acylaminogruppe darstellt, so handelt es sich z.B. um eine Gruppe der Formel

$$- NH - V - R^1$$

wobei V -CO- oder $-SO_2-$ und $R^1$ gegebenenfalls substituiertes Alkyl oder Phenyl bedeutet.

Es handelt sich bei dem Acylrest z.B. um den Acetyl-, Propionyl-, 2-Chlorethylcarbonyl-, 2-Bromethylcarbonyl-, Phenylcarbonyl-, 2-Methoxycarbonylethylcarbonyl-, 2-Ethoxycarbonylethylcarbonyl-, Methoxycarbonyl-, Ethoxycarbonyl-, Phenoxycarbonyl, Methoxyethylcarbonyl-, Hydroxyethylcarbonyl-, Methylsulfonyl- oder Ethylsulfonylrest.

Ist X eine Gruppe der Formel -NH-CO-NHQ, so handelt es sich z.B. um die Ureido-, Methylureido-, Ethylureido- oder Phenylureidogruppe.

Unter Phenylresten sind in dieser Anmeldung generell unsubstituierte oder substituierte Phenylreste zu verstehen. Als Substituenten kommen z.B. $C_1$-$C_4$-Alkyl, $C_1$-$C_4$-Alkoxy, Brom, Chlor, Nitro oder $C_1$-$C_4$-Alkylcarbonylamino in Betracht.

Halogen bedeutet in dieser Anmeldung generell Fluor, Brom oder vor allem Chlor.

R und Y können zusammen mit dem Stickstoffatom und den beiden sie verbindenden C-Atomen einen 5- oder 6-gliedrigen Ring bilden, welcher gegebenenfalls ein Sauerstoffatom als weiteres Heteroatom enthalten kann. Geeignete Substituenten für diese Ringe sind z.B. Hydroxy, Methyl, Methoxy, Chlor oder Phenyl. Vorzugsweise bilden R und Y zusammen mit dem Stickstoffatom und den beiden sie verbindenden C-Atomen einen 6-Ring, welcher unsubstituiert ist oder 1 bis 4 Methylgruppen trägt. Es handelt sich also vor allem um Di- oder Tetrahydrochinolinverbindungen mit 0 bis 4 Methylgruppen.

In besonders bevorzugten Dispersionsfarbstoffen ist D ein Benzthiazolylrest, welcher unsubstituiert ist oder ein- oder zweimal durch Chlor substituiert ist oder ein Phenylrest, der ein- oder zweimal substituiert ist durch Nitro, Chlor, Cyan, Methyl- oder Ethylsulfonyl oder Phenylazo.

Die bevorzugten Bedeutungen von X sind Wasserstoff, Methyl, Methoxy Chlor, Brom, Acetylamino oder Ureido, wobei Wasserstoff, Methyl, Chlor und Acetylamino besonders bevorzugt sind.

Y bedeutet vorzugsweise Chlor, Methyl, Methoxy, Methoxyethyl oder Methoxyethoxy oder vor allem Wasserstoff.

Die bevorzugte Bedeutung von R ist $C_1$-$C_4$-Alkyl, welches gegebenenfalls substituiert ist durch Hydroxy, $C_1$-$C_4$-Alkoxy oder Phenyl. In besonders bevorzugten Verbindungen der Formel (1) ist R Methyl, Ethyl oder Benzyl.

B stellt vorzugsweise einen geradkettigen oder verzweigten Alkylenrest mit 2 bis 4 Kohlenstoffatomen dar, welcher gegebenenfalls durch Hydroxy substituiert ist. Insbesondere bevorzugt sind die Dispersionsfarbstoffe der Formel (1), bei denen B Ethylen ist.

Die bevorzugten Bedeutungen von W sind Chlor, Methyl oder Methoxy, wobei jedoch Verbindungen, bei denen n Null ist, besonders bevorzugt sind.

Z bedeutet vorzugsweise Chlor, Methyl, Methoxy, Nitro, wobei jedoch Verbindungen, bei denen m Null ist, vor allem bevorzugt sind.

Der Phenylazorest, welcher den Substituenten Z trägt, ist vorzugsweise in p-Stellung zum Sauerstoff angeordnet.

Wegen ihrer guten färberischen Eigenschaften sind vor allem diejenigen Farbstoffe der Formel (1) von Interesse, bei denen

| | |
|---|---|
| D | ein Benzthiazolylrest, welcher unsubstituiert ist oder ein- oder zweimal durch Chlor substituiert ist oder ein Phenylrest, der ein- oder zweimal substituiert ist durch Nitro, Chlor, Cyan, Methyl- oder Ethylsulfonyl oder Phenylazo, |
| X | Wasserstoff, Methyl, Methoxy, Chlor, Brom, Acetylamino oder Ureido, |

Y Chlor, Methyl, Methoxy, Methoxyethyl, Methoxyethoxy oder Wasserstoff ist und

R $C_1$-$C_4$-Alkyl, welches unsubstituiert ist oder durch Hydroxy, Cyan, $C_1$-$C_4$-Alkoxy oder Phenyl substituiert ist,

B ein $C_2$-$C_4$-Alkylenrest, welcher unsubstituiert oder durch Hydroxy substituiert ist,

W Chlor, Methoxy oder Methyl,

Z Chlor, Methyl, Methoxy oder Nitro und

m und n jeweils 0 oder 1 bedeuten.

Unter diesen sind diejenigen von ganz besonderem Interesse, bei denen X Methyl, Acetylamino, Chlor oder Wasserstoff, Y Wasserstoff, R Methyl, Ethyl oder Benzyl, B Ethylen und m und n jeweils Null bedeuten.

Die Verbindungen der Formel (1) werden auf an sich bekannte Art und Weise dargestellt, beispielsweise indem man ein diazotiertes Amin der Formel

D - $NH_2$ (2)

mit einer Verbindung der Formel

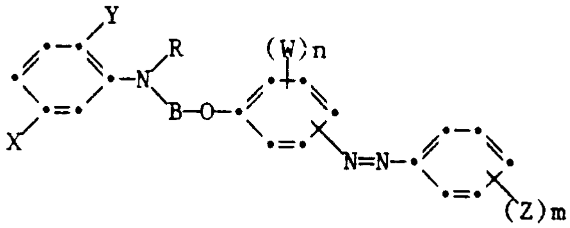

(3)

kuppelt, wobei D, X, Y, R, B, W, Z, m und n die unter der Formel (1) angegebene Bedeutung aufweisen.

Die Verbindungen der Formel (2) sind bekannt oder lassen sich in Analogie zur Herstellung ähnlicher Verbindungen herstellen.

Die Verbindungen der Formel (3) sind neu und stellen einen weiteren Gegenstand der vorliegenden Erfindung dar. Sie werden z.B. hergestellt, indem man ein Hydroxyazobenzol der Formel

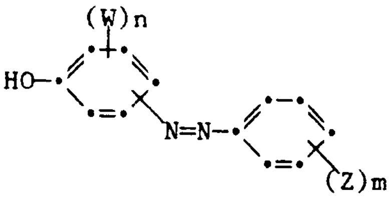

(4)

mit einer Dihalogenverbindung

Hal—B—Hal (5)

zu einer Verbindung der Formel

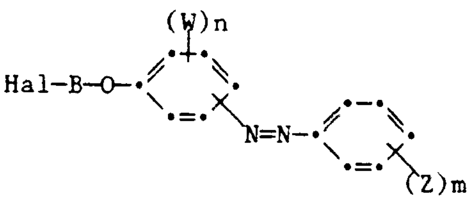

(6)

umsetzt und diese anschliessend mit einem Anilinderivat der Formel

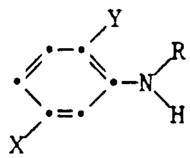

(7)

zu einer Verbindung der Formel (3) umsetzt.

Bei den Formeln (4) bis (7) weisen W, Z, B, X, Y, R, n und m die unter der Formel (1) angegebene Bedeutung auf und Hal bedeutet Chlor oder Brom, wobei die beiden Halogenatome gleich oder verschieden sein können.

Die Verbindungen der Formel (4) und (5) sind bekannt oder lassen sich auf bekannte Art und Weise herstellen.

Bei der Umsetzung der Verbindung (4) mit der Verbindung (5) arbeitet man vorzugsweise in einem inerten organischen Lösungsmittel und in Gegenwart einer Base. Als inerte organische Lösungsmittel kommen z.B. Verbindungen mit einem Siedepunkt oberhalb 100 °C in Frage, wie Alkohole, Ether, Ester, Nitrobenzol, Halogenbenzol, Toluol, Xylole etc. Vor allem geeignet sind höher siedende Alkohole, wie tert.-butanol, sowie Ether von mehrwertigen Alkoholen, z.B. Diethylenglykolmonoethylether oder -monomethylether sowie die entsprechenden Diether.

Die Komponenten (4) und (5) können in stöchiometrischem Verhältnis eingesetzt werden, ein Ueberschuss an einer der Komponenten, vorzugsweise der Verbindung (5), erweist sich jedoch oft als günstiger.

Die Reaktionstemperatur liegt etwa zwischen 80 und 150 °C, vorzugsweise zwischen 100 und 130 °C und die Reaktionsdauer beträgt, je nach Temperatur und Reaktionspartnern etwa 1 bis 20 Stunden. Nach Beendigung der Umsetzung wird die evtl. im Ueberschuss eingesetzte Komponente (5) entfernt und anschliessend die erhaltene Verbindung der Formel (6) mit einem Anilinderivat der Formel (7) umgesetzt. Auch diese Umsetzung wird vorzugsweise in einem der obengenannten Lösungsmittel durchgeführt. Die Temperatur liegt normalerweise oberhalb 100 °C, insbesondere zwischen 120 und 200 °C und vor allem zwischen 140 und 180 °C.

Die Komponenten (6) und (7) können in stöchiometrischem Verhältnis eingesetzt werden, normalerweise setzt man jedoch die leichter zugängliche Komponente, meist das Anilinderivat (7), im Ueberschuss ein, z.B. in 10%-igem Ueberschuss.

Nach Beendigung der Reaktion wird auf übliche Weise aufgearbeitet, z.B. indem man den Ueberschuss an der Komponente (7) und das Lösungsmittel entfernt und den Rückstand gegebenenfalls reinigt, z.B. durch Umkristallisation.

Sowohl bei der Umsetzung der Verbindungen (4) und (5) als auch bei der Umsetzung der Verbindungen (6) und (7) arbeitet man in Gegenwart einer Base, wobei sowohl organische als auch anorganische Basen geeignet sind, z.B. Pyridin, Piperidin, Triethylamin, Natrium- oder Kaliumcarbonat oder -hydrogencarbonat. Diese Base wird im allgemeinen in geringem Ueberschuss, z.B. in 10%-igem Ueberschuss, eingesetzt.

Die gesamte Herstellung der Verbindung (3) lässt sich auch als sogenannte Eintopfreaktion durchführen, indem man für die beiden Reaktionsschritte das gleiche Lösungsmittel einsetzt und die Verbindung (6) nicht isoliert.

Die Diazotierung der Verbindungen der Formel (2) und die Kupplung mit den Verbindungen der Formel (3) erfolgen nach den üblichen Methoden.

Die erfindungsgemässen Verbindungen der Formel (1) können als Farbstoffe zum Färben und Bedrukken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2 1/2-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus $\alpha,\alpha$-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nichtionischen Dispergiermitteln und gegebenenfalls üblichen Quellmitteln (Carrier) bei Temperaturen zwischen 80 und 140 °C. Cellulose-2 1/2-acetat färbt man vorzugsweise zwischen ungefähr 65 bis 85 °C und Cellulosetriacetat bei Temperaturen bis zu 115 °C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich ferner zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat überzuführen. Hierzu wird der Farbstoff vermahlen, so dass seine Teilchengrösse im Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristall-gummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe sind praktisch unempfindlich gegen Carrier und verleihen den genannten Materialien, vor allem dem Polyestermaterial, egale gelbe bis violette Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch eine gute pH-Stabilität und sehr gute Reibechtheit. Es werden ausserdem sehr farbstarke Färbungen erzielt. Besonders hervorzuheben sind die gute Sublimierechtheit und die gute Thermofixierechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander oder Mischungen der erfindungsgemässen Farbstoffe mit anderen Dispersionsfarbstoffen verwendet werden.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder diesem einzuverleiben. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die folgenden Beispiele veranschaulichen die Erfindung weiter, ohne sie darauf zu beschränken. Teile und Prozente beziehen sich, sofern nicht anders angegeben, auf das Gewicht.

Beispiel 1 1,73 g 2-Chlor-4-nitroanilin werden in 12,5 ml Wasser zusammen mit 4,4 ml Salzsäure konz. und ca. 0,05 g eines nichtionogenen Dispergators suspendiert. Unter Kühlung auf 0 bis 5 °C werden 2,6 ml 4 N Natriumnitritlösung zugetropft. Man rührt noch 1 Stunde bei 0 bis 5 °C, filtriert und zerstört überschüssiges Nitrit mit Sulfaminsäure. Die so erhaltene Diazoniumsalzlösung wird innerhalb von 1 Stunde bei 0 bis 5 °C zu einer Lösung von 3,45 g N-Ethyl-N-2(4-phenylazophenoxy)ethylanilin in 200 ml Eisessig zugetropft. Anschliessend rührt man noch 2 Stunden bei 0 bis 5 °C, tropft 200 ml Eiswasser zu und versetzt mit 20 g Natriumacetat, wobei der Farbstoff der Formel

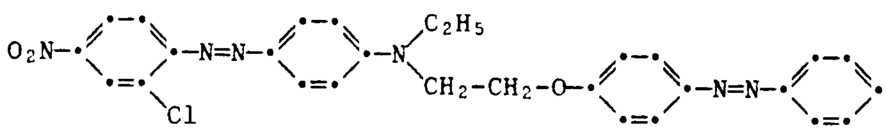

ausfällt.

Man rührt noch 1/2 Stunde bei Raumtemperatur, filtriert, wäscht den Rückstand mit Wasser und wenig Methanol und trocknet ihn bei 50 °C im Vakuum.
Die Ausbeute beträgt ca. 83 % der Theorie. Der erhaltene Farbstoff färbt Polyestergewebe in roten Tönen mit sehr guten Echtheiten, insbesondere mit sehr guter Sublimier- und Thermomigrierechtheit.

Beispiel 2: 2,1 g Dichlor-2-aminobenzthiazol werden bei Raumtemperatur in einem Gemisch von 20 ml Eisessig und 10 ml Propionsäure gelöst. Bei 0 bis 5 °C tropft man 3,5 g Nitrosylschwefelsäure 40 % zu und rührt noch 1 Stunde. Die so erhaltene Diazoniumsalzlösung wird innerhalb von 1 Stunde bei 0 bis 5 °C zu einer Lösung von 3,45 g N-Ethyl-N-2(4-phenylazophenoxy)ethylanilin in 100 ml Dimethylformamid zugetropft. Anschliessend rührt man noch 2 Stunden bei 0 bis 5 °C, tropft 75 ml Wasser zu und rührt 1/2 Stunde bei Raumtemperatur. Der erhaltene Farbstoff der Formel

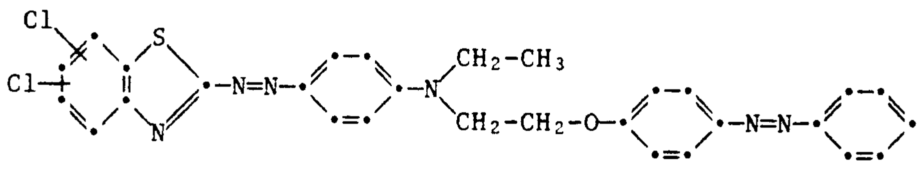

wird abgesaugt, mit Wasser und wenig Methanol gewaschen und bei 50 °C im Vakuum getrocknet. Die Ausbeute beträgt ca. 78 % der Theorie. Der erhaltene Farbstoff färbt Polyestergewebe in roten Tönen mit sehr guten Echtheiten, insbesondere mit sehr guter Sublimier- und Thermomigrierechtheit.

Beispiele 3-106: Die nachfolgenden Farbstoffe werden analog zu der Arbeitsweise in den Beispielen 1 und 2 hergestellt. Sie färben Polyestergewebe in den angegebenen Nuancen mit guten Echtheiten.

| Bsp. | Farbstoff | Nuance auf Polyester |
|---|---|---|
| 3 | 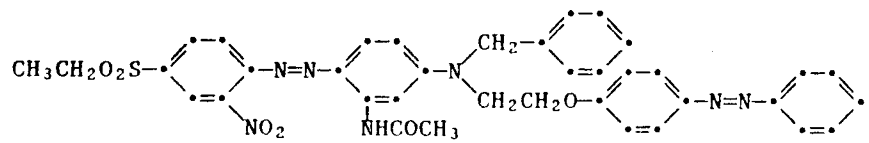 | rot |
| 4 | 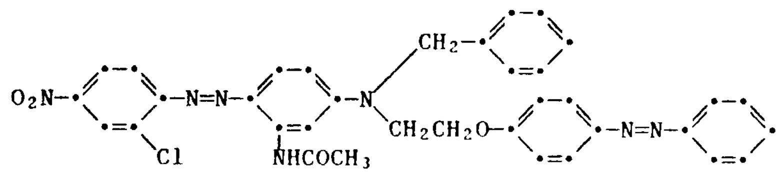 | rot |
| 5 | 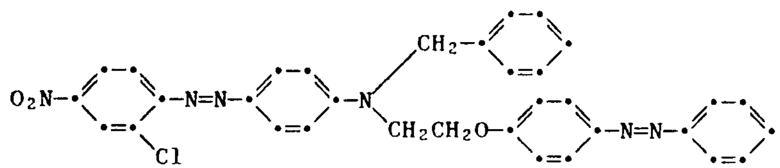 | scharlach-rot |
| 6 | 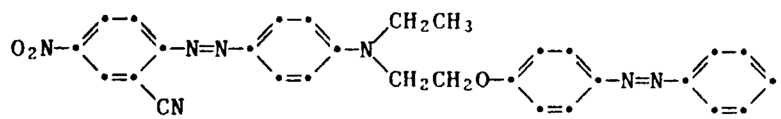 | bordeaux |
| 7 | 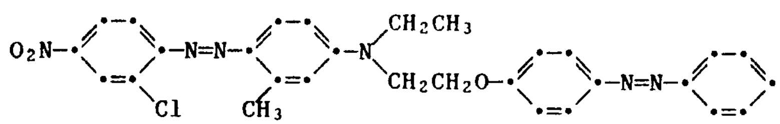 | rot |

| Bsp. | Farbstoff | Nuance auf Polyester |
|---|---|---|
| 8 | 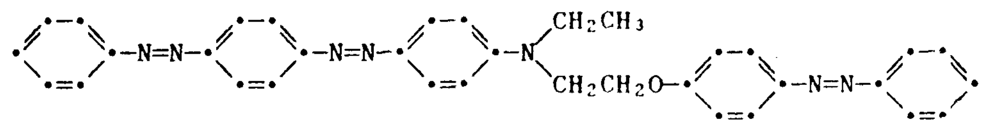 | orange |
| 9 | 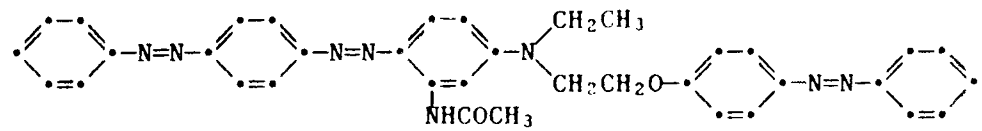 | rot |
| 10 | 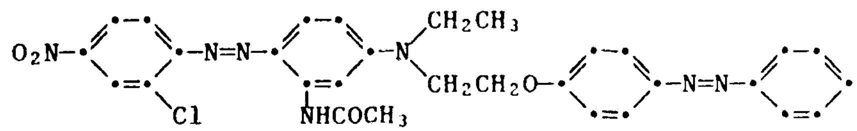 | rot |
| 11 | 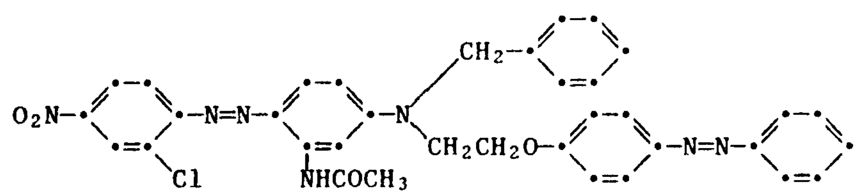 | rot |
| 12 | 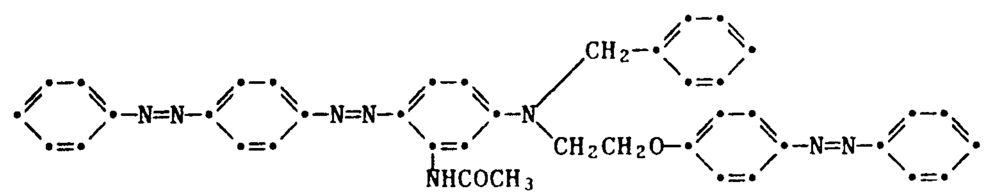 | orange |

| Bsp. | Farbstoff | Nuance auf Polyester |
|---|---|---|
| 13 | 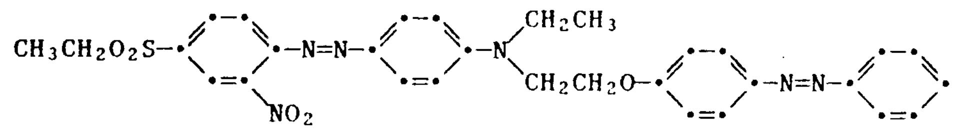 | scharlach |
| 14 | 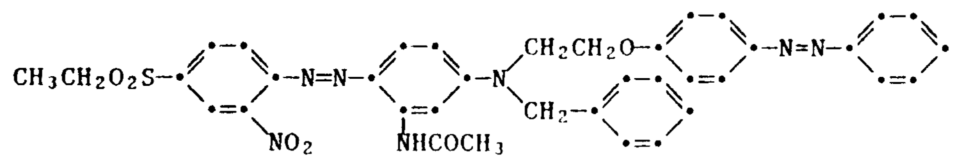 | rot |
| 15 | 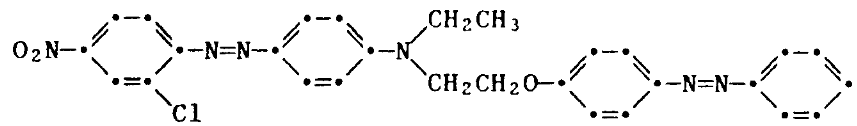 | rot |
| 16 | 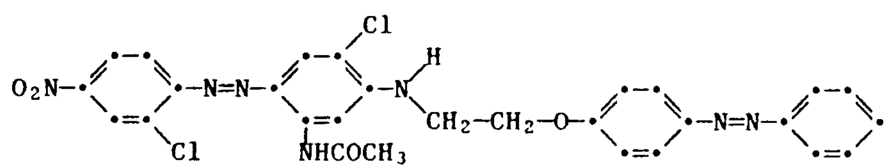 | rot |
| 17 | 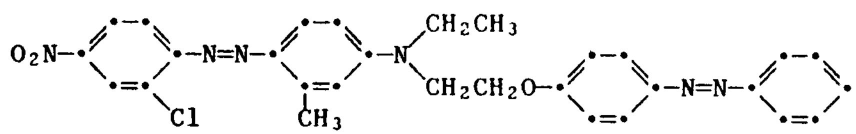 | rubin |

| Bsp. | Farbstoff | Nuance auf Polyester |
|---|---|---|
| 18 | 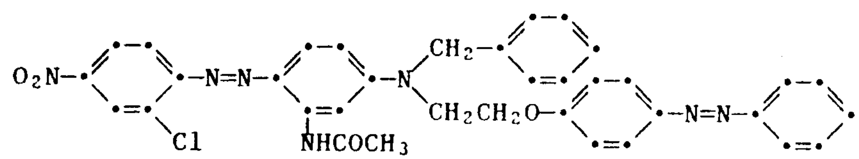 | rot |
| 19 | 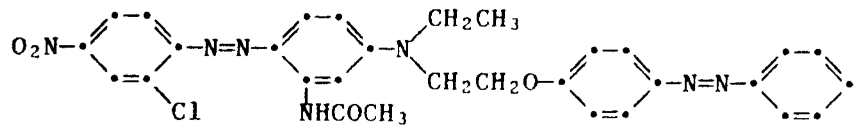 | rot |
| 20 | 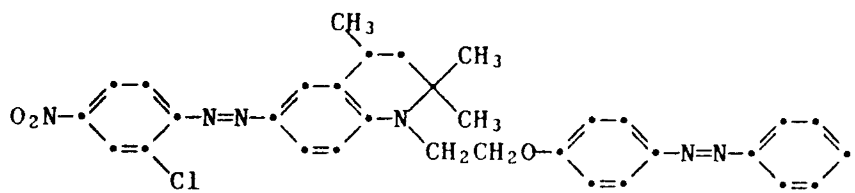 | rot |
| 21 | 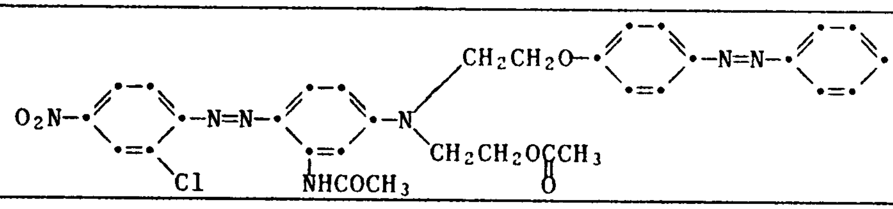 | rot |
| 22 | 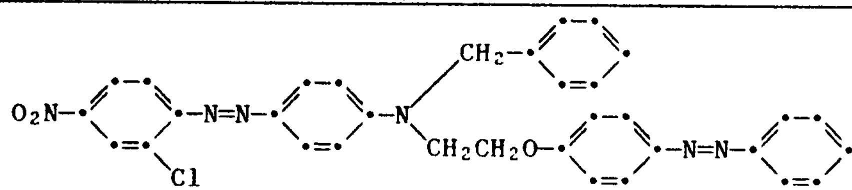 | scharlach |

| Bsp. | Farbstoff | Nuance auf Polyester |
|---|---|---|
| 23 | 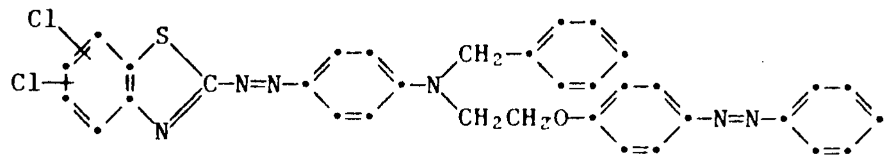 | scharlach |
| 24 | 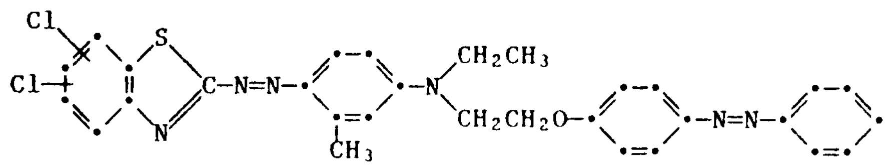 | rot |
| 25 | 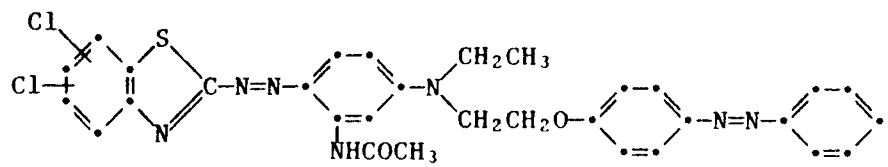 | rubin |
| 26 | 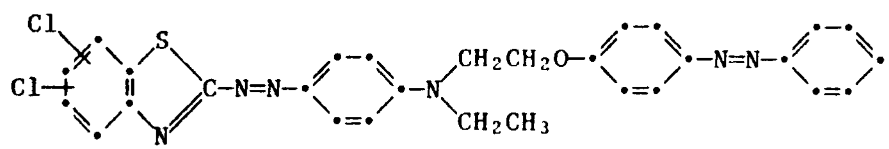 | rot |
| 27 | 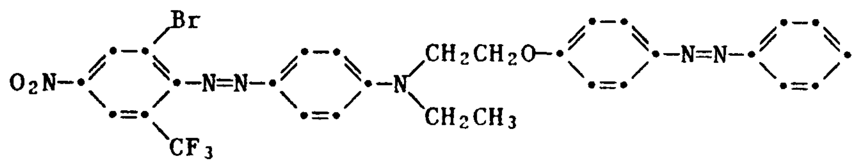 | scharlach |

| Bsp. | Farbstoff | Nuance auf Polyester |
|---|---|---|
| 28 | 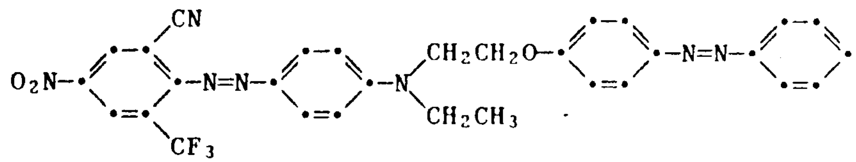 | violett |
| 29 | 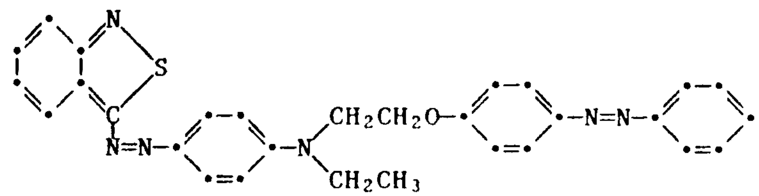 | rubin |
| 30 | 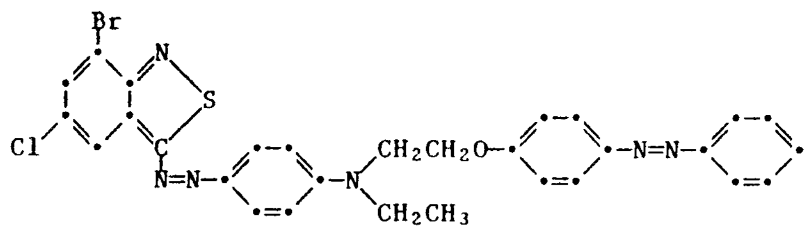 | violett |
| 31 | 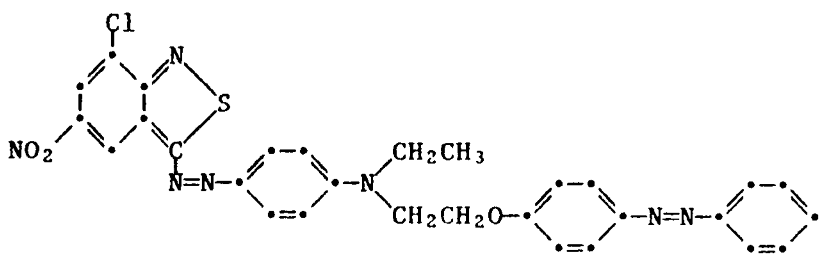 | blau |

| Bsp. | Farbstoff | Nuance auf Polyester |
|---|---|---|
| 32 | 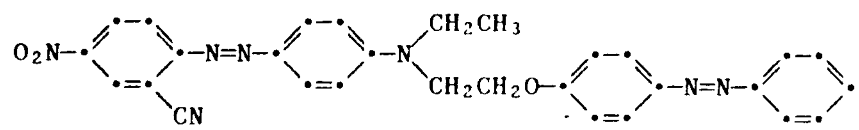 | rubin |
| 33 | 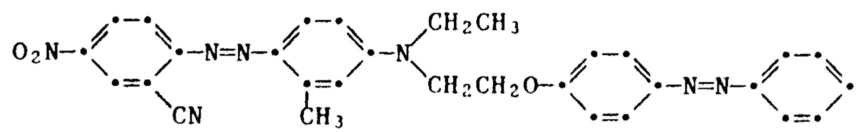 | violett |
| 34 | 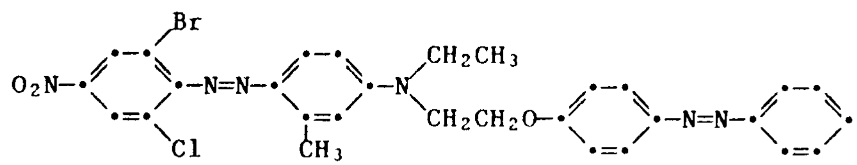 | braun |
| 35 | 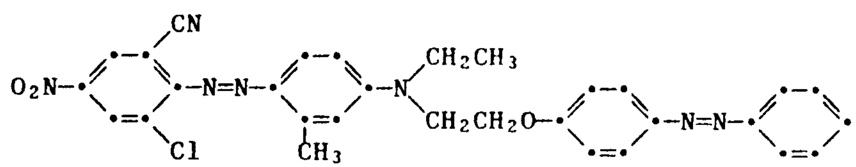 | violett |
| 36 | 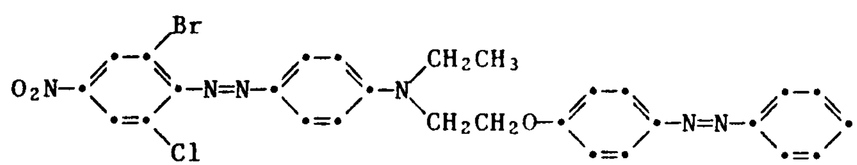 | orange |

| Bsp. | Farbstoff | Nuance auf Polyester |
|---|---|---|
| 37 | 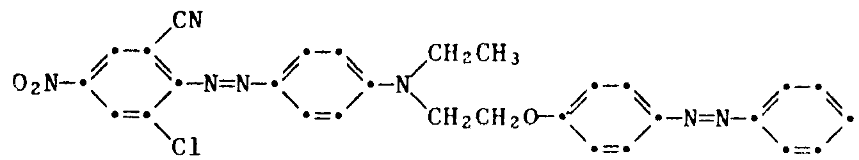 | violett |
| 38 | 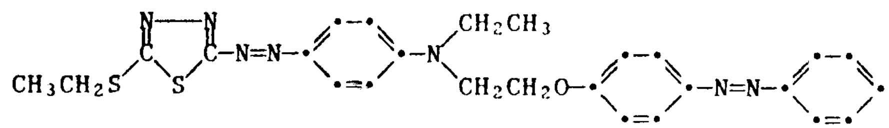 | orange |
| 39 | 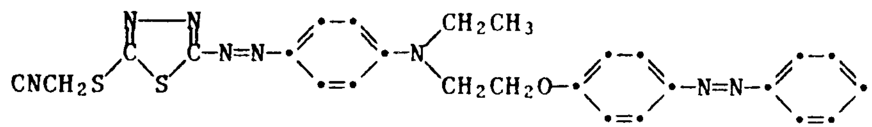 | orange |
| 40 | 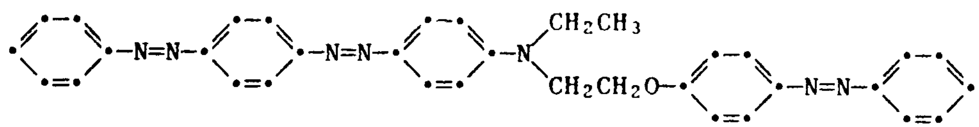 | orange |
| 41 | 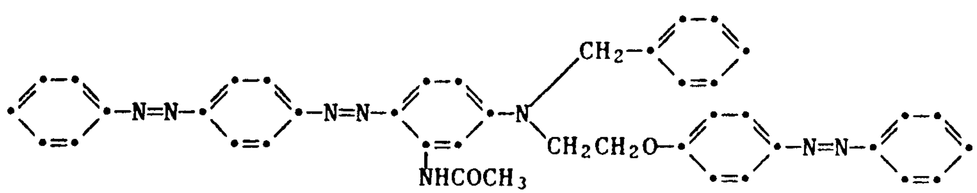 | rot |

| Bsp. | Farbstoff | Nuance auf Polyester |
|---|---|---|
| 42 | 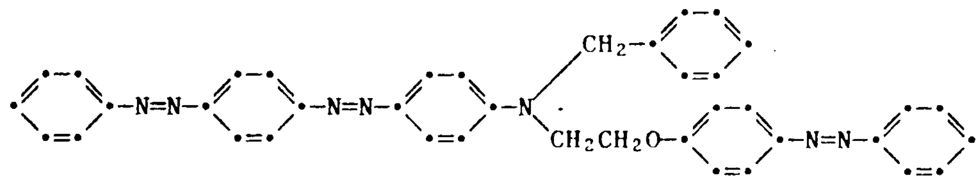 | gelb |
| 43 | 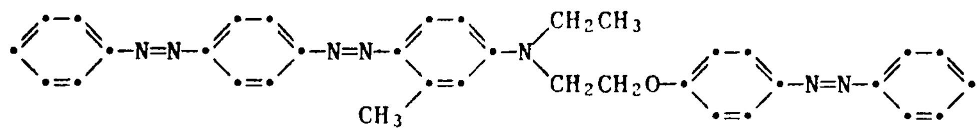 | orange |
| 44 | 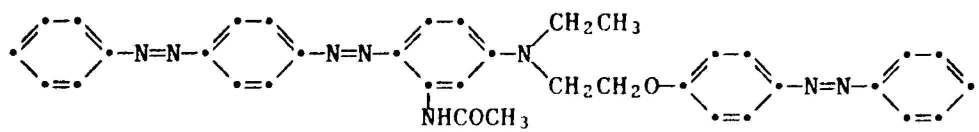 | rot |
| 45 | 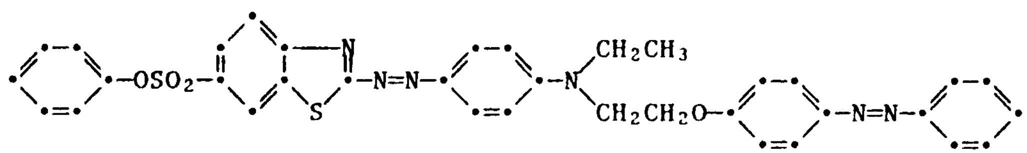 | rot |
| 46 | 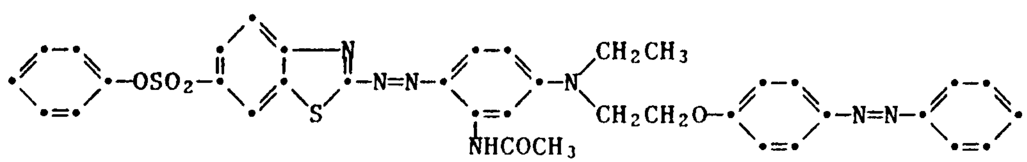 | violett |

| Bsp. | Farbstoff | Nuance auf Polyester |
|---|---|---|
| 47 | 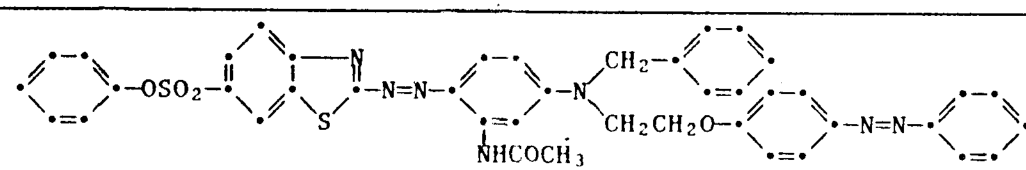 | rubin |
| 48 | 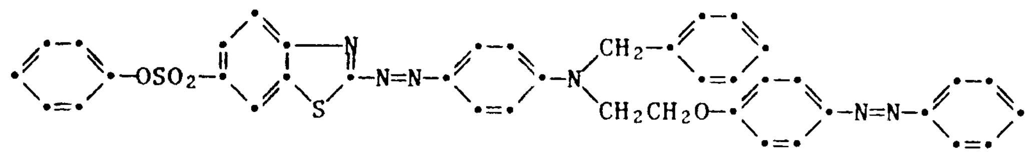 | rot |
| 49 | 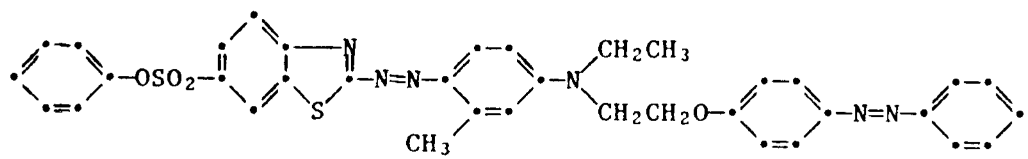 | rubin |
| 50 | 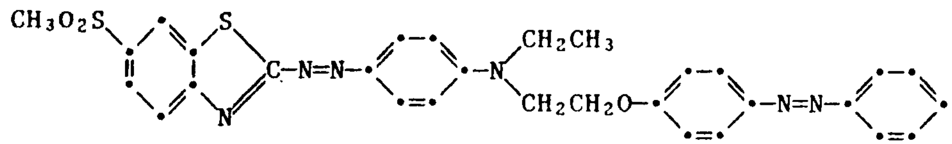 | rot |
| 51 | 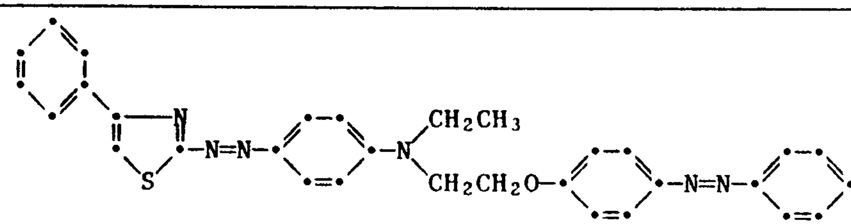 | orange |

| Bsp. | Farbstoff | Nuance auf Polyester |
|---|---|---|
| 52 | 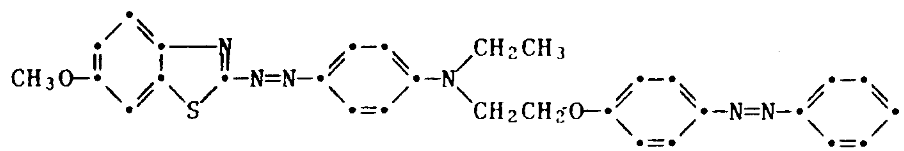 | rubin |
| 53 | 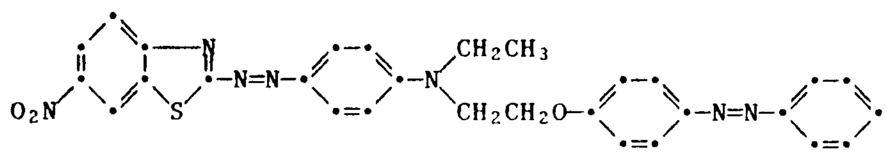 | rubin |
| 54 | 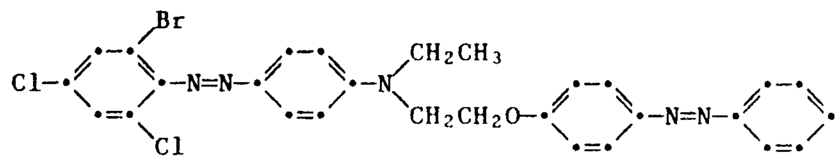 | gelb |
| 55 | 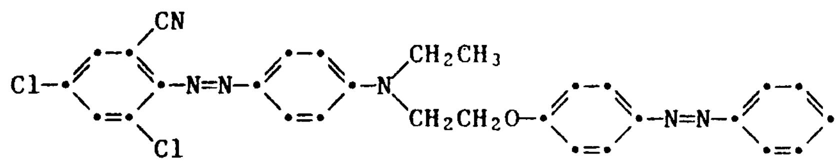 | orange |
| 56 | 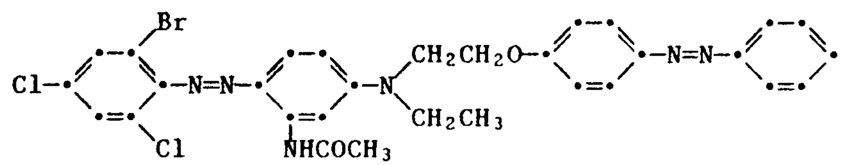 | goldgelb |

| Bsp. | Farbstoff | Nuance auf Polyester |
|---|---|---|
| 57 | 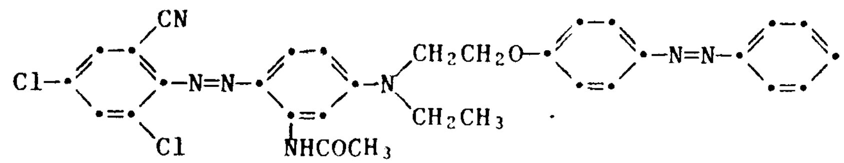 | rubin |
| 58 | 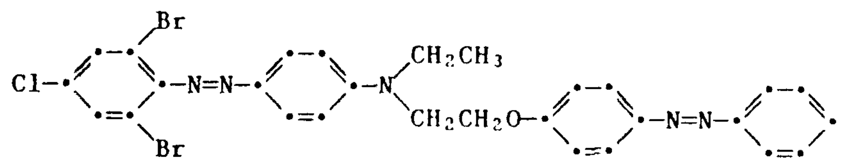 | gelb |
| 59 | 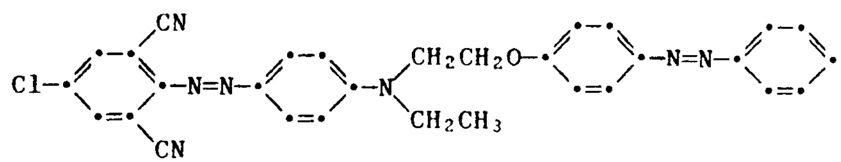 | rot |
| 60 | 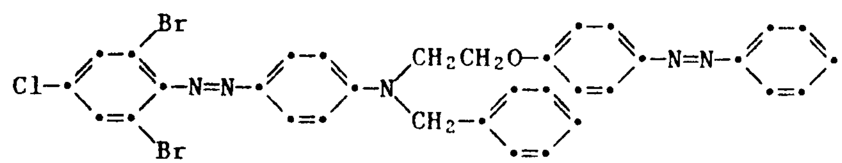 | gelb |
| 61 | 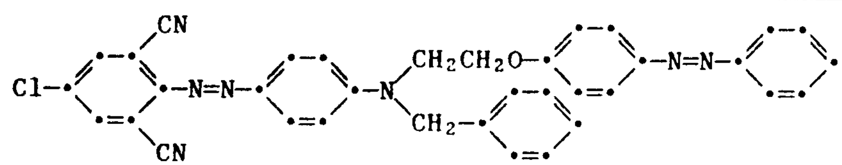 | rot |

| Bsp. | Farbstoff | Nuance auf Polyester |
|---|---|---|
| 62 | 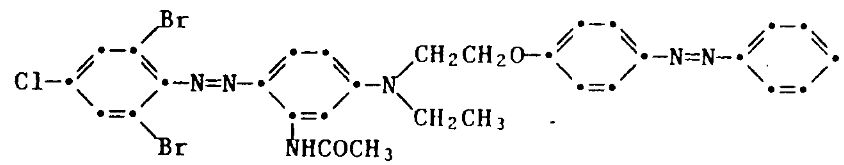 | goldgelb |
| 63 | 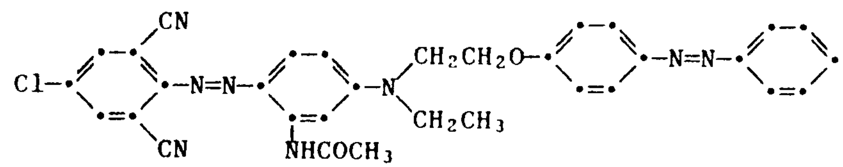 | rubin |
| 64 | 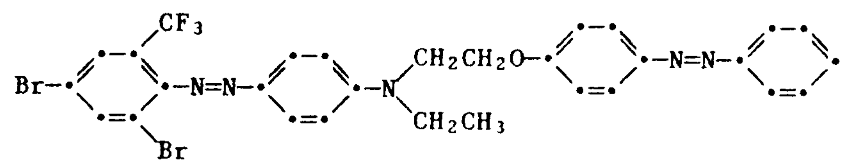 | gelb |
| 65 | 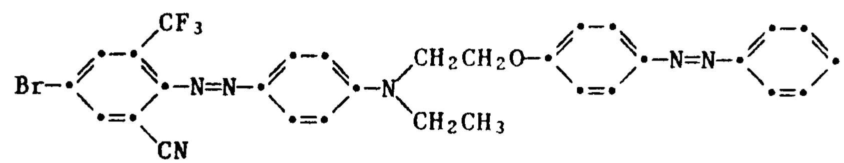 | scharlach |
| 66 | 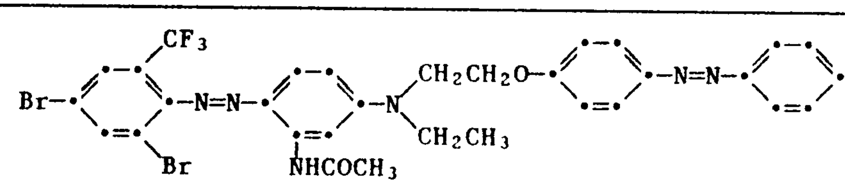 | goldgelb |

| Bsp. | Farbstoff | Nuance auf Polyester |
|---|---|---|
| 67 | 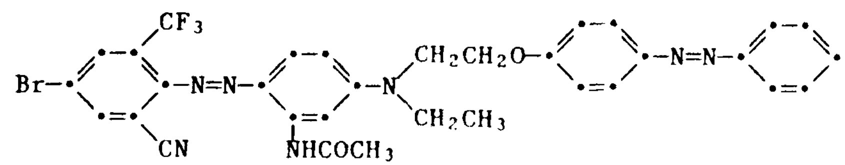 | rubin |
| 68 | 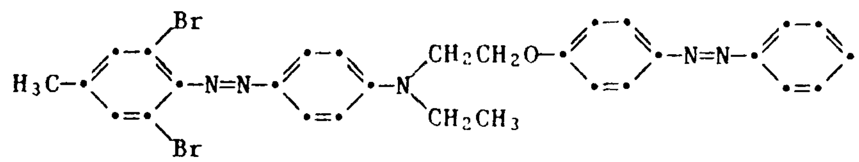 | gelb |
| 69 | 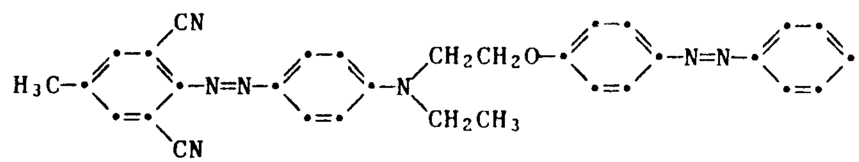 | scharlach |
| 70 | 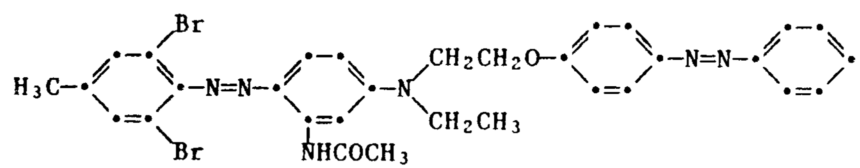 | gelb |
| 71 | 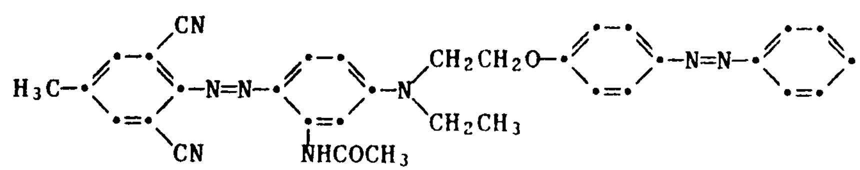 | rubin |

| Bsp. | Farbstoff | Nuance auf Polyester |
|---|---|---|
| 72 | 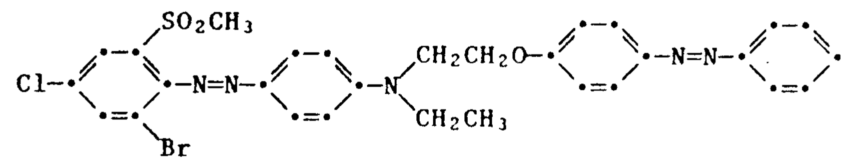 | gelb |
| 73 | 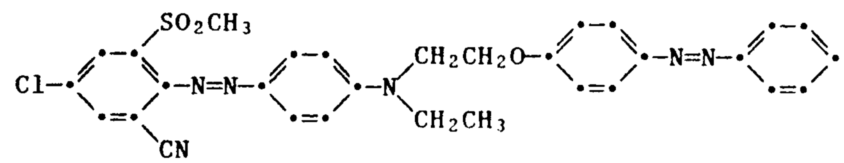 | rot |
| 74 | 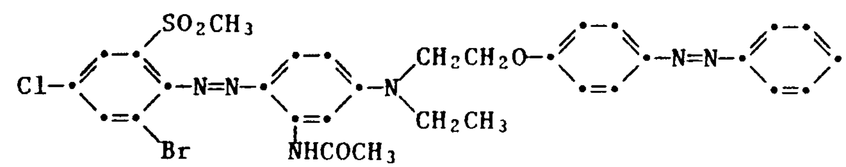 | orange |
| 75 | 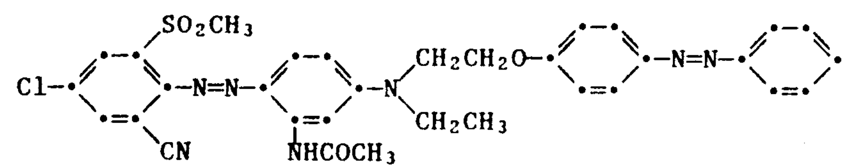 | rubin |
| 76 | 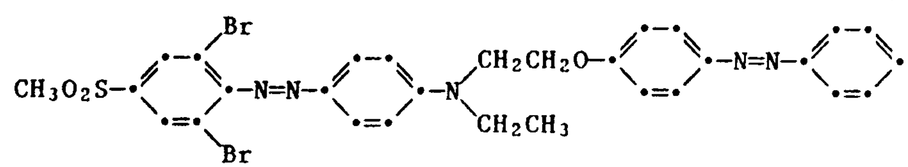 | gelb |

| Bsp. | Farbstoff | Nuance auf Polyester |
|---|---|---|
| 77 | 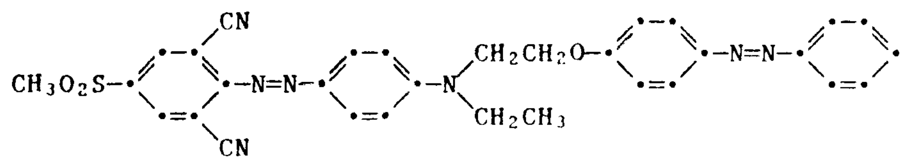 | violett |
| 78 | 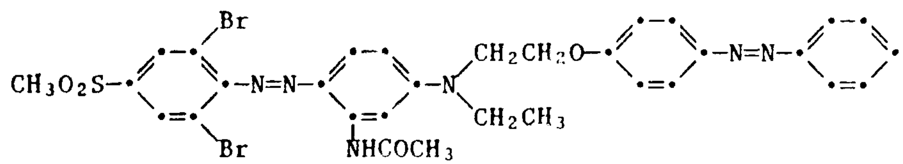 | orange |
| 79 | 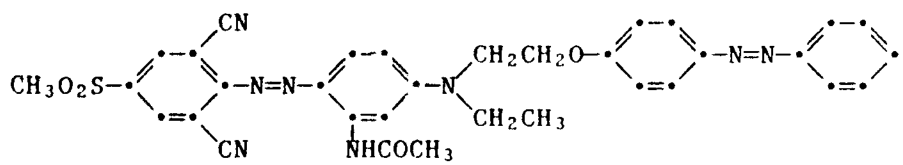 | violett |
| 80 | 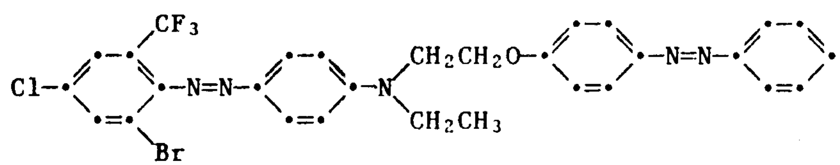 | gelb |
| 81 | 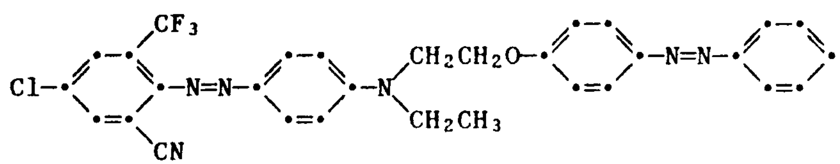 | orange |

| Bsp. | Farbstoff | Nuance auf Polyester |
|---|---|---|
| 82 | 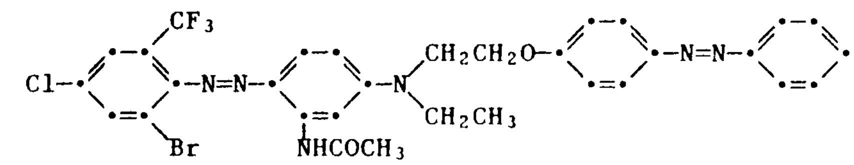 | orange |
| 83 | 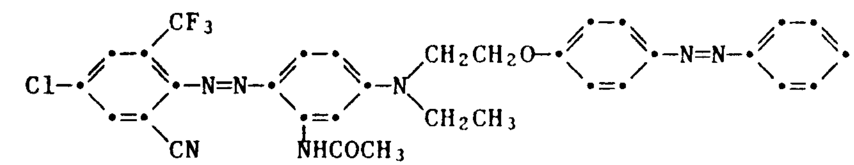 | rot |
| 84 | 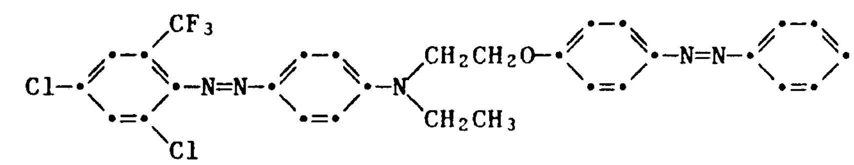 | orange |
| 85 | 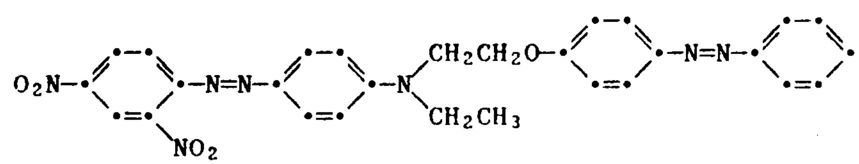 | rubin |
| 86 | 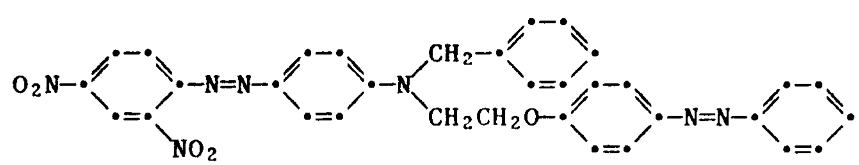 | rot |

| Bsp. | Farbstoff | Nuance auf Polyester |
|---|---|---|
| 87 | 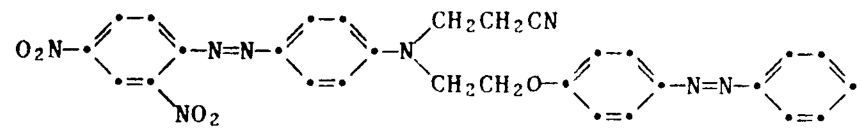 | scharlach |
| 88 | 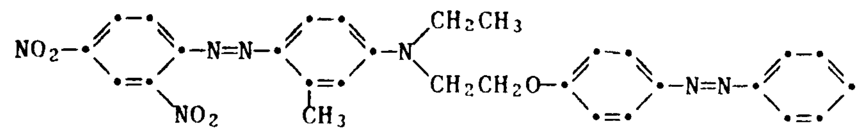 | violett |
| 89 | 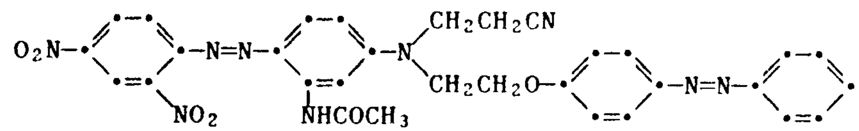 | rubin |
| 90 | 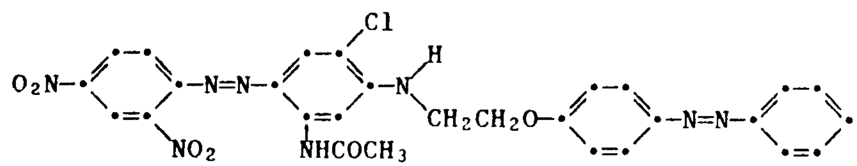 | rot |
| 91 | 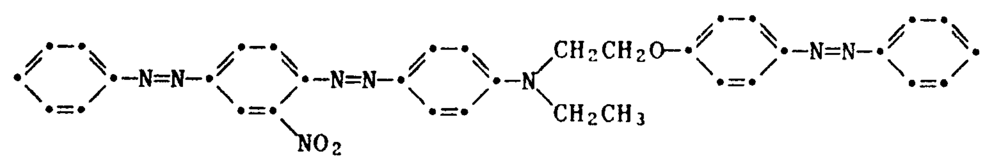 | rot |

| Bsp. | Farbstoff | Nuance auf Polyester |
|---|---|---|
| 92 | 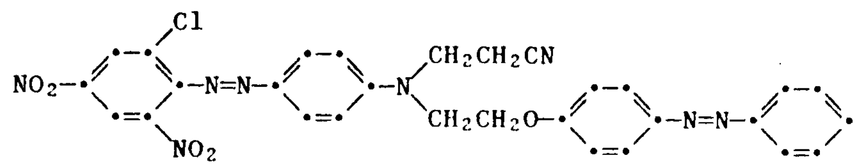 | rot |
| 93 | 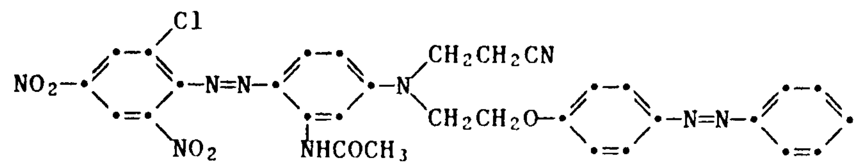 | violett |
| 94 | 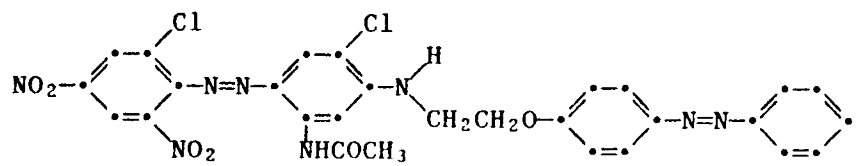 | violett |
| 95 | 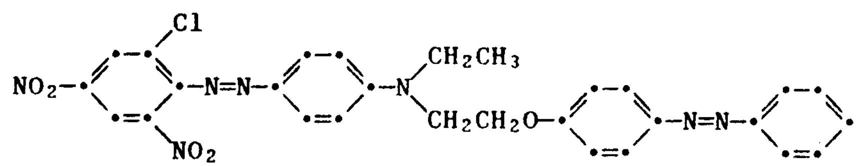 | violett |
| 96 | 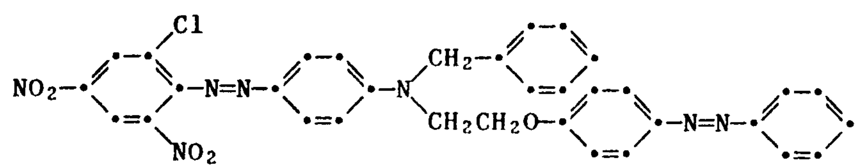 | rubin |

| Bsp. | Farbstoff | Nuance auf Polyester |
|---|---|---|
| 97 | 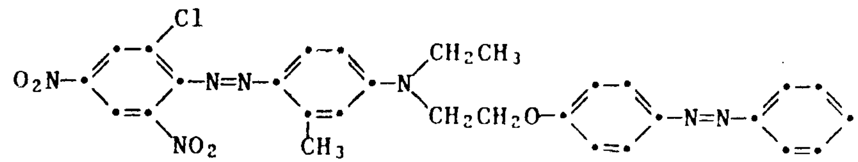 | violett |
| 98 | 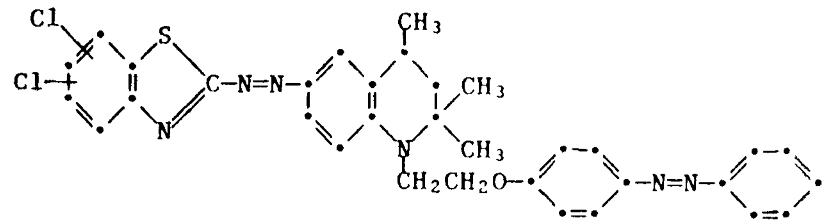 | rot |
| 99 | 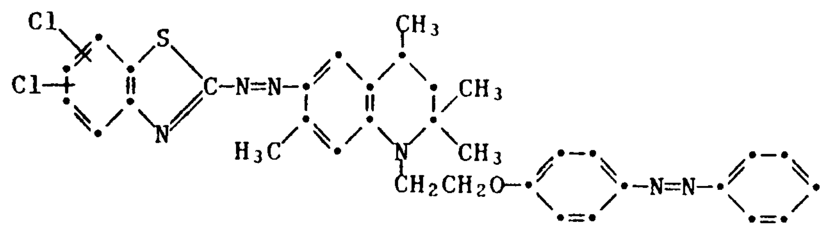 | rubin |
| 100 | 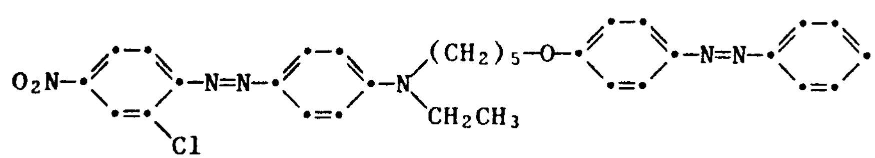 | rubin |

| Bsp. | Farbstoff | Nuance auf Polyester |
|---|---|---|
| 101 | 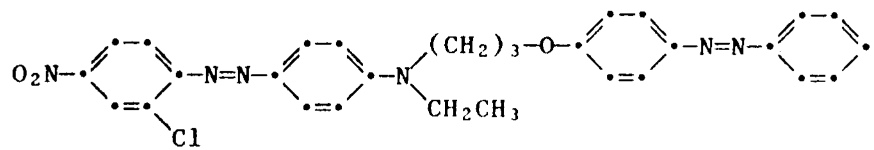 | rot |
| 102 | 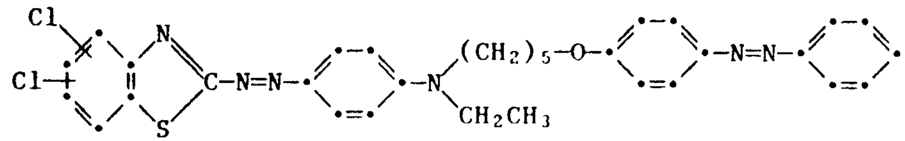 | rot |
| 103 | 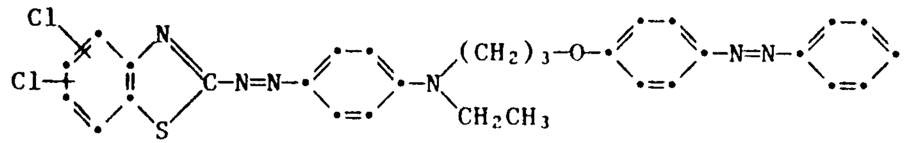 | rot |
| 104 | 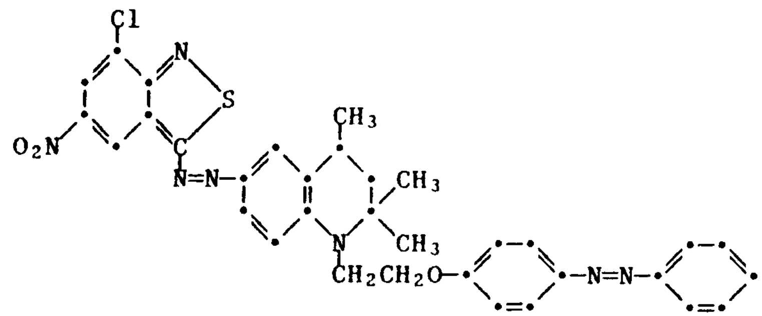 | blau |

| Bsp. | Farbstoff | Nuance auf Polyester |
|---|---|---|
| 105 | 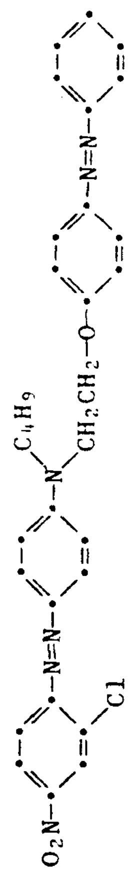 | rot |
| 106 | 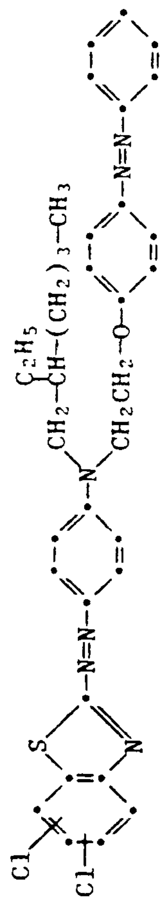 | rot |

Beispiel 107: 19,8 g 4-Hydroxyazobenzol werden in 100 ml Diethylenglykolmonoethylether gelöst und mit 12,8 g Soda und 52,5 ml 1,2-Dibromethan versetzt. Man erwärmt auf ca. 116 ° C und rührt 2 Stunden bei dieser Temperatur. Dann entfernt man das überschüssige Dibromethan durch Wasserdampfdestillation und anschliessend durch Destillation bei ca. 110 ° C im Vakuum das Wasser. Man erhält eine Suspension, enthaltend ca. 26 g eines orangeroten Pulvers der Formel

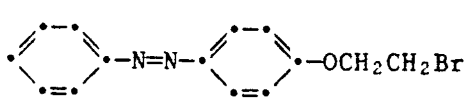

Zu dieser Suspension gibt man 10,8 g Soda und 11,3 ml N-Ethylanilin, erwärmt auf 120 bis 125 ° C und rührt 12 Stunden bei dieser Temperatur. Dann wird der Ueberschuss an N-Ethylanilin durch Wasserdampfdestillation entfernt. Das Reaktionsgemisch wird auf Raumtemperatur abgekühlt, wobei sich ein hellbraunes, zähflüssiges Oel abscheidet. Das Wasser wird abdekantiert, das Oel in Aceton gelöst und der geringe unlösliche Rückstand abfiltriert. Dann wird das Filtrat mit Eis und Wasser versetzt, der sich abscheidende Niederschlag abgesaugt und mit Wasser gewaschen. Man erhält ca. 23 g eines goldgelben Pulvers der Formel

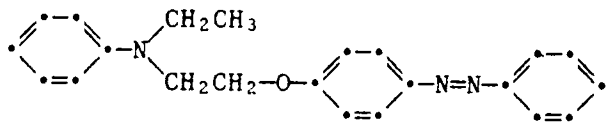

mit einem Schmelzpunkt von 80-82 ° C.

Beispiele 108-113: Auf analoge Weise wie im Beispiel 107 beschrieben, lassen sich die folgenden Verbindungen herstellen.

108 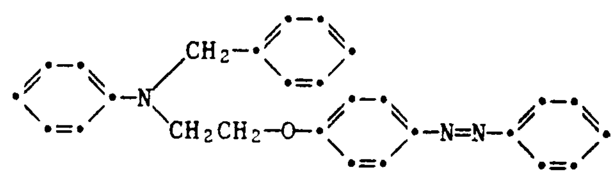

109 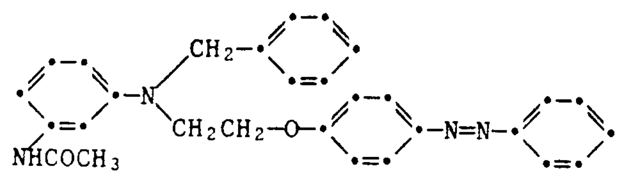

110 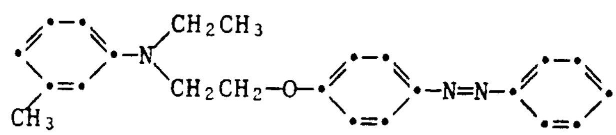

111 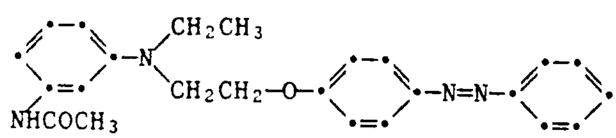

112 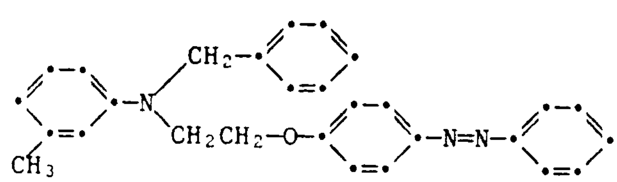

113 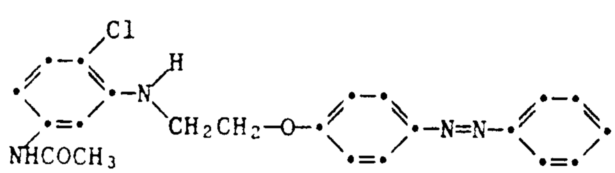

Beispiel 114: 5 Teile des gemäss Beispiel 1 erhaltenen Farbstoffes werden mit 10 Teilen eines salzarmen Dispergators (Dinaphthylmethansulfonsäure-Typ) vermischt und in 85 Teilen Wasser mit Hilfe von 300 Teilen Glaskugeln von 0,5 mm Durchmesser in einer Mikrosolmühle gemahlen.

4 Teile Polyestergewebe (Diolen) werden in 100 Teilen eines auf pH 4 eingestellten Färbebades, das 0,2 Teile der vorstehenden Dispersion sowie je 0,05 Teile eines Netzmittels (z.B. Fettsäure-Methyltaurid)

und eines Dispergators (z.B. auf Dinaphthylmethansulfonatbasis) enthält, während einer Stunde bei 130° gefärbt. Man erhält eine rote Färbung mit sehr guter Lichtechtheit. Die Färbung zeichnet sich ausserdem durch hervorragende Sublimier- und Thermofixierechtheit aus.

Beispiel 115: Polyethylenglykolterephthalatgewebe wird auf einem Foulard bei 40° mit einer Flotte folgender Zusammensetzung imprägniert:

20 Teile des gemäss Beispiel 114 erhaltenen Farbstoffpräparates fein dispergiert in
10 Teilen Natriumalginat,
20 Teilen nichtionogenem Netzmittel und
930 Teilen Wasser.

Das auf ca. 60 % abgequetschte Gewebe wird bei 100° getrocknet und anschliessend während 60 Sekunden bei einer Temperatur von 210° fixiert. Die gefärbte Ware wird mit Wasser gespült, geseift oder reduktiv gereinigt und getrocknet. Man erhält eine brillante, lichtechte rote Färbung, welche sich vor allem durch gute Thermomigrationsechtheit auszeichnet.

## Patentansprüche

**1.** Dispersionsfarbstoffe der Formel

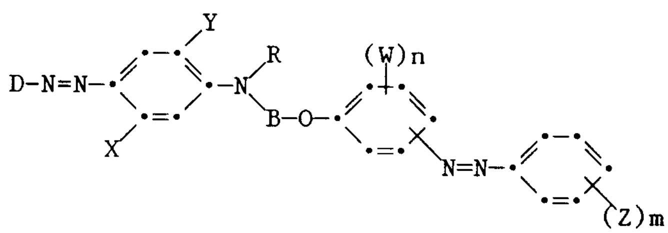

(1)

worin

| | |
|---|---|
| D | den Rest einer homocyclischen oder heterocyclischen Diazokomponente aus der Reihe Thienyl, Thiazolyl, Isothiazolyl, 1,2,4-Thiadiazolyl, 1,3,4-Thiadiazolyl, Benzthiazolyl, Benzisothiazolyl, Pyrazolyl, Imidazolyl oder Phenyl bedeutet, wobei diese Diazokomponenten substituiert sein können durch Alkyl, Alkoxy oder Alkylthio mit je 1 bis 4 Xohlenstoffatomen, Phenyl, Halogen, Trifluormethyl, Cyano, Nitro, Acyl, Benzoyl, Carboalkoxy, Alkylsulfon mit 1 bis 4 Kohlenstoffatomen, Phenylsulfon, Phenoxysulfon, Sulfonamid oder Arylazo, oder wobei je 2 benachbarte Substituenten der genannten Ringsysteme auch zusammen weitere ankondensierte Ringe bilden können, |
| X | Wasserstoff, $C_1$-$C_4$-Alkyl, $C_1$-$C_4$-Alkoxy, Acylamino, Halogen oder eine Gruppe der Formel -NH-CO-NHQ, worin Q Wasserstoff, $C_1$-$C_4$-Alkyl oder Phenyl ist, |
| Y | Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy, |
| R | Wasserstoff, $C_1$-$C_{12}$-Alkyl, $C_2$-$C_{12}$-Alkenyl oder Phenyl, oder Y und R, zusammen mit dem Stickstoffatom und den beiden sie verbindenden C-Atomen, einen 5- oder 6-Ring bilden, |
| B | einen geradkettigen oder verzweigten $C_2$-$C_6$-Alkylenrest, |
| W | Halogen, $C_1$-$C_4$-Alkyl oder $C_1$-$C_4$-Alkoxy, |
| Z | Halogen, $C_1$-$C_4$-Alkyl, $C_1$-$C_4$-Alkoxy oder Nitro und |
| m und n | jeweils 0, 1, 2 oder 3 bedeuten. |

**2.** Farbstoffe gemäss Anspruch 1, worin D Thienyl, Thiazolyl, Isothiazolyl, 1,2,4-Thiadiazolyl, 1,3,4-Thiadiazolyl, Benzthiazolyl, Benzisothiazolyl, Pyrazolyl, Imidazolyl, oder Phenyl bedeutet, wobei jedes dieser Systeme unsubstituiert ist oder durch $C_1$-$C_4$-Alkyl, $C_1$-$C_4$-Alkoxy, $C_1$-$C_4$-Alkylthio, Chlor, Brom, Trifluormethyl, Cyano, Nitro, Acyl, Benzoyl, Carboalkoxy, $C_1$-$C_4$-Alkylsulfon, Phenylsulfon, Sulfonamid oder Arylazo substituiert ist, oder worin zwei benachbarte Substituenten einen weiteren ankondensierten Ring bilden.

**3.** Farbstoffe gemäss Anspruch 2, worin D einen unsubstituierten oder einen ein- oder mehrmals durch Methyl, Methoxy, Chlor, Methylsulfon oder Nitro substituierten Benzthiazolylrest darstellt oder einen

Phenylrest, welcher unsubstituiert ist oder substituiert durch Cyano, Methyl-oder Ethylsulfonyl, Nitro, Chlor, Brom, Formyl, Acetyl, Benzoyl, Carbomethoxy, Carboethoxy, Methoxy, Ethoxy oder Phenylazo.

**4.** Farbstoffe gemäss Anspruch 3, worin D ein Benzthiazolylrest ist, welcher unsubstituiert ist oder ein- oder zweimal durch Chlor substituiert ist oder ein Phenylrest, der unsubstituiert ist oder ein- oder zweimal substituiert ist durch Nitro, Chlor, Cyan, Methyl- oder Ethylsulfonyl oder Phenylazo.

**5.** Farbstoffe gemäss einem der Ansprüche 1 bis 4, worin X Wasserstoff, Methyl, Methoxy, Chlor, Brom, Acetylamino oder Ureido ist.

**6.** Farbstoffe gemäss einem der Ansprüche 1 bis 5, worin Y Chlor, Methyl, Methoxy, Methoxyethyl, Methoxyethoxy oder Wasserstoff ist.

**7.** Farbstoffe gemäss einem der Ansprüche 1 bis 6, worin R $C_1$-$C_4$-Alkyl, welches gegebenenfalls substituiert ist durch Hydroxy, $C_1$-$C_4$-Alkoxy oder Phenyl, ist.

**8.** Farbstoffe gemäss einem der Ansprüche 1 bis 7, worin B einen Alkylenrest mit 2 bis 4 Kohlenstoffatomen darstellt, welcher unsubstituiert oder durch Hydroxy substituiert ist.

**9.** Farbstoffe gemäss einem der Ansprüche 1 bis 8, worin W Chlor, Methyl oder Methoxy ist oder worin n Null ist.

**10.** Farbstoffe gemäss einem der Ansprüche 1 bis 9, worin Z Chlor, Methyl oder Methoxy ist oder worin m Null ist.

**11.** Farbstoffe gemäss Anspruch 1, worin

| | |
|---|---|
| D | ein Benzthiazolylrest, welcher unsubstituiert ist oder ein- oder zweimal durch Chlor substituiert ist oder ein Phenylrest, der unsubstituiert ist oder ein- oder zweimal substituiert ist durch Nitro, Chlor, Cyan, Methyl- oder Ethylsulfonyl oder Phenylazo, |
| X | Wasserstoff, Methyl, Methoxy, Chlor, Brom, Acetylamino oder Ureido, |
| Y | Chlor, Methyl, Methoxy, Methoxyethyl, Methoxyethoxy oder Wasserstoff ist und |
| R | $C_1$-$C_4$-Alkyl, welches unsubstituiert ist oder durch Hydroxy, $C_1$-$C_4$-Alkoxy oder Phenyl substituiert ist, |
| B | ein $C_2$-$C_4$-Alkylenrest, welcher unsubstituiert oder durch Hydroxy substituiert ist, |
| W | Chlor, Methoxy oder Methyl, |
| Z | Chlor, Methyl, Methoxy oder Nitro und |
| m und n | jeweils 0 oder 1 bedeuten. |

**12.** Farbstoffe gemäss Anspruch 11, worin X Methyl, Acetylamino, Chlor oder Wasserstoff, Y Wasserstoff, R Methyl, Ethyl oder Benzyl, B Ethylen und m und n jeweils Null bedeuten.

**13.** Verfahren zur Herstellung von Farbstoffen der Formel (1) gemäss Anspruch 1, dadurch gekennzeichnet, dass man ein diazotiertes Amin der Formel mit einer Verbindung der Formel

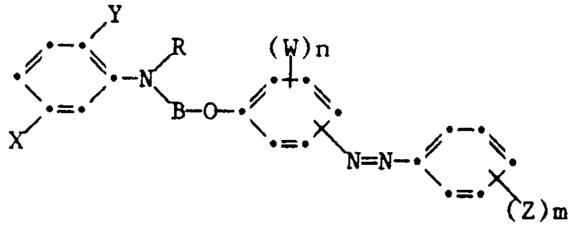

(3)

kuppelt, wobei D, X, Y, R, B, W, Z, m und n die unter der Formel (1) angegebene Bedeutung aufweisen.

**14.** Verbindung der Formel

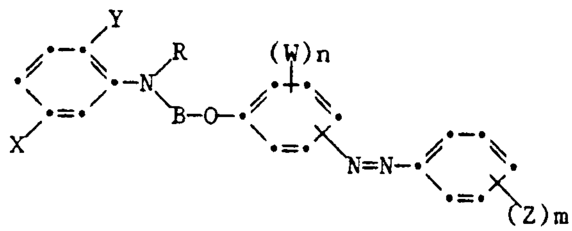

(3)

worin

| | |
|---|---|
| X | Wasserstoff, $C_1$-$C_4$-Alkyl, $C_1$-$C_4$-Alkoxy, Acylamino, Halogen oder ein Gruppe der Formel -NH-CO-NHQ, worin Q Wasserstoff, $C_1$-$C_4$-Alkyl oder Phenyl ist, |
| Y | Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy, |
| R | Wasserstoff, $C_1$-$C_{12}$-Alkyl, $C_2$-$C_{12}$-Alkenyl oder Phenyl, oder Y und R, zusammen mit dem Stickstoffatom und den beiden sie verbindenden C-Atomen einen 5- oder 6-Ring bilden, |
| B | einen geradkettigen oder verzweigten $C_2$-$C_6$-Alkylenrest, |
| W | Halogen, $C_1$-$C_4$-Alkyl oder $C_1$-$C_4$-Alkoxy, |
| Z | Halogen, $C_1$-$C_4$-Alkyl, $C_1$-$C_4$-Alkoxy oder Nitro und |
| m und n | jeweils 0, 1, 2 oder 3 bedeuten. |

**15.** Verbindung der Formel

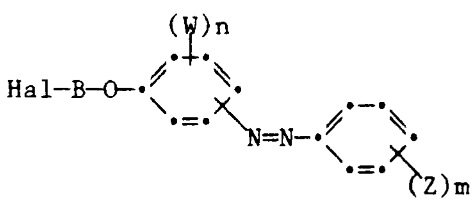

(6)

worin

B einen geradkettigen oder verzweigten $C_2$-$C_6$-Alkylenrest,
W Halogen, $C_1$-$C_4$-Alkyl oder $C_1$-$C_4$-Alkoxy,
Z Halogen, $C_1$-$C_4$-Alkyl, $C_1$-$C_4$-Alkoxy oder Nitro
Hal Chlor oder Brom und
m und n jeweils 0, 1, 2 oder 3 bedeuten.

**16.** Verfahren zur Herstellung von Verbindungen der Formel (3) gemäss Anspruch 14, dadurch gekennzeichnet, dass man ein Hydroxyazobenzol der Formel

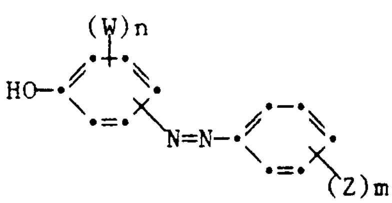

(4)

mit einer Dihalogenverbindung

Hal—B—Hal (5)

zu einer Verbindung der Formel

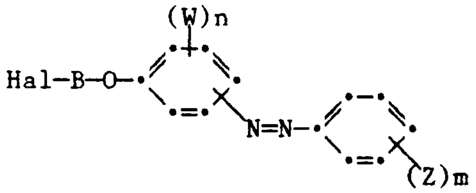 (6)

umsetzt und diese anschliessend mit einem Anilinderivat der Formel

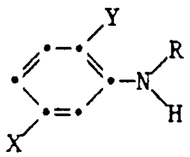 (7)

zu einer Verbindung der Formel (3) umsetzt, wobei W, Z, X, Y, R, n und m die unter der Formel (3) angegebene Bedeutung aufweisen und Hal Chlor oder Brom bedeutet.

**17.** Verfahren zur Herstellung von Verbindungen der Formel (6) gemäss Anspruch 15, dadurch gekennzeichnet, dass man ein Hydroxyazobenzol der Formel

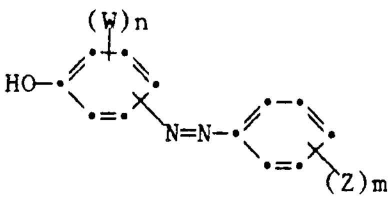 (4)

mit einer Dihalogenverbindung

Hal—B—Hal (5)

umsetzt.

**18.** Verwendung der Dispersionsfarbstoffe gemäss Anspruch 1 zum Färben oder Bedrucken von halbsynthetischem oder synthetischem hydrophobem Fasermaterial, insbesondere Textilmaterial.

**19.** Verwendung nach Anspruch 18 zum Färben oder Bedrucken von Textilmaterial aus Polyesterfasern.

**20.** Verfahren zum Färben oder Bedrucken von halbsynthetischem oder synthetischem hydrophobem Fasermaterial, insbesondere Textilmaterial, dadurch gekennzeichnet, dass man eine oder mehrere der in Anspruch 1 definierten Verbindungen auf das gesamte Material aufbringt oder diesem einverleibt.

**21.** Verfahren nach Anspruch 20, worin das hydrophobe Fasermaterial, vorzugsweise Textilmaterial, aus Polyesterfasern besteht.

**22.** Das gemäss Anspruch 20 oder 21 gefärbte oder bedruckte Material.

## Claims

1. A disperse dye of the formula

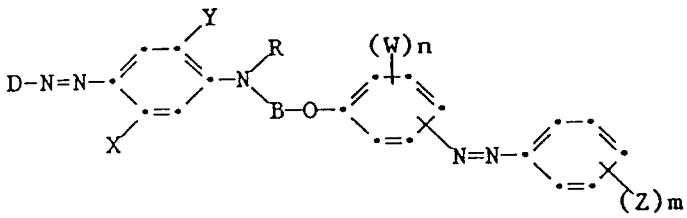

(1)

in which

| | |
|---|---|
| D | is the radical of a homocyclic or heterocyclic diazo component belonging to the series comprising thienyl, thiazolyl, isothiazolyl, 1,2,4-thiadiazolyl, 1,3,4-thiadiazolyl, benzothiazolyl, benzoisothiazolyl, pyrazolyl, imidazolyl or phenyl, where these diazo components can be substituted by alkyl, alkoxy or alkylthio, having in each case 1 to 4 carbon atoms, phenyl, halogen, trifluoromethyl, cyano, nitro, acyl, benzoyl, carboalkoxy, alkylsulfonyl having 1 to 4 carbon atoms, phenylsulfonyl, phenoxysulfonyl, sulfonamide or arylazo, or where in each case 2 adjacent substituents of the stated ring systems, possibly in combination, may form further fused-on rings, |
| X | is hydrogen, $C_1$-$C_4$alkyl, $C_1$-$C_4$alkoxy, acylamino, halogen or a group of the formula -NH-CO-NHQ in which Q is hydrogen, $C_1$-$C_4$alkyl or phenyl, |
| Y | is hydrogen, halogen, $C_1$-$C_4$alkyl, $C_1$-$C_4$alkoxy, $C_1$-$C_4$alkoxy-$C_1$-$C_4$alkyl or $C_1$-$C_4$alkoxy-$C_1$-$C_4$alkoxy, |
| R | is hydrogen, $C_1$-$C_{12}$alkyl, $C_2$-$C_{12}$alkenyl or phenyl, or Y and R, together with the nitrogen atom and the two C atoms linking them, for a 5-membered ring or 6-membered ring, |
| B | is a linear or branched $C_2$-$C_6$alkylene radical, |
| W | is halogen, $C_1$-$C_4$alkyl or $C_1$-$C_4$alkoxy, |
| Z | is halogen, $C_1$-$C_4$alkyl, $C_1$-$C_4$alkoxy or nitro and |
| m and n | are each 0, 1, 2 or 3. |

2. A dye according to claim 1, in which D is thienyl, thiazolyl, isothiazolyl,1,2,4-thiadiazolyl, 1,3,4-thiadiazolyl, benzothiazolyl, benzoisothiazolyl, pyrazolyl, imidazolyl or phenyl, each of these systems being unsubstituted or substituted by $C_1$-$C_4$alkyl, $C_1$-$C_4$alkoxy, $C_1$-$C_4$alkylthio, chlorine, bromine, trifluoromethyl, cyano, nitro, acyl, benzoyl, carboalkoxy, $C_1$-$C_4$alkylsulfonyl, phenylsulfonyl, sulfonamide or arylazo, or in which two adjacent substituents form a further fused ring.

3. A dyestuff according to claim 2, in which D is a benzothiazolyl radical which is unsubstituted or is monosubstituted or polysubstituted by methyl, methoxy, chlorine, methylsulfonyl or nitro, or is a phenyl radical which is unsubstituted or is substituted by cyano, methylsulfonyl, ethylsulfonyl, nitro, chlorine, bromine, formyl, acetyl, benzoyl, carbomethoxy, carboethoxy, methoxy, ethoxy or phenylazo.

4. A dye according to claim 3, in which D is a benzothiazolyl radical which is unsubstituted or is monosubstituted or disubstituted by chlorine, or is a phenyl radical which is unsubstituted or is monosubstituted or disubstituted by nitro, chlorine, cyano, methylsulfonyl, ethylsulfonyl or phenylazo.

5. A dye according to one of claims 1 to 4, in which X is hydrogen, methyl, methoxy, chlorine, bromine, acetylamino or ureido.

6. A dye according to one of claims 1 to 5, in which Y is chlorine, methyl, methoxy, methoxyethyl, methoxyethoxy or hydrogen.

7. A dye according to one of claims 1 to 6, in which R is $C_1$-$C_4$alkyl which is unsubstituted or substituted by hydroxyl, $C_1$-$C_4$alkoxy or phenyl.

**8.** A dye according to one of claims 1 to 7, in which B is an alkylene radical which has 2 to 4 carbon atoms and which is unsubstituted or substituted by hydroxyl.

**9.** A dye according to one of claims 1 to 8, in which W is chlorine, methyl or methoxy or in which n is nought

**10.** A dye according to one of claims 1 to 9, in which Z is chlorine, methyl or methoxy or in which m is nought.

**11.** A dye according to claim 1, in which

| | |
|---|---|
| D | is a benzothiazolyl radical which is unsubstituted or is monosubstituted or disubstituted by chlorine, or is a phenyl radical which is unsubstituted or is monosubstituted or disubstituted by nitro, chlorine, cyano, methylsulfonyl, ethylsulfonyl or phenylazo, |
| X | is hydrogen, methyl, methoxy, chlorine, bromine, acetylamino or ureido, |
| Y | is chlorine, methyl, methoxy, methoxyethyl, methoxyethoxy or hydrogen and |
| R | is $C_1$-$C_4$alkyl which is unsubstituted or is substituted by hydroxyl, $C_1$-$C_4$alkoxy or phenyl, |
| B | is a $C_2$-$C_4$alkylene radical which is unsubstituted or substituted by hydroxyl, |
| W | is chlorine, methoxy or methyl, |
| Z | is chlorine, methyl, methoxy or nitro and |
| m and n | are each 0 or 1. |

**12.** A dye according to claim 11, in which X is methyl, acetylamino, chlorine or hydrogen, Y is hydrogen, R is methyl, ethyl or benzyl, B is ethylene and m and n are each nought.

**13.** A process for the preparation of dyes of the formula (1) according to claim 1, which comprises coupling a diazotized amine of the formula

$D - NH_2$ (2)

with a compound of the formula

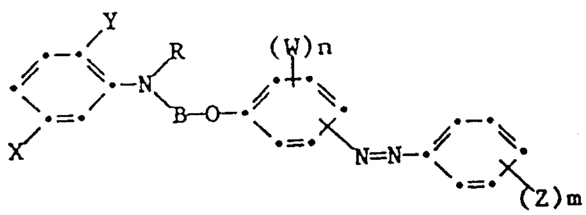
(3)

in which D, X, Y, R, B, W, Z, m and n are as defined under the formula (1).

**14.** A compound of the formula

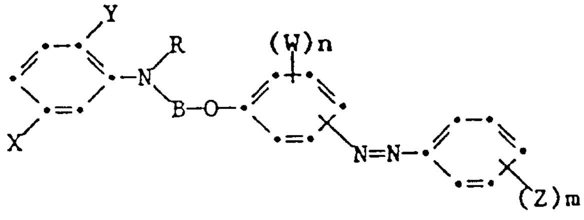
(3)

in which

| | |
|---|---|
| X | is hydrogen, $C_1$-$C_4$alkyl, $C_1$-$C_4$alkoxy, acylamino, halogen or a group of the formula -NH-CO-NHQ in which Q is hydrogen, $C_1$-$C_4$alkyl or phenyl, |
| Y | is hydrogen, halogen, $C_1$-$C_4$alkyl, $C_1$-$C_4$alkoxy, $C_1$-$C_4$alkoxy-$C_1$-$C_4$alkyl or $C_1$-$C_4$alkoxy-$C_1$-$C_4$alkoxy, |

R is hydrogen, $C_1$-$C_{12}$alkyl, $C_2$-$C_{12}$alkenyl or phenyl, or Y and R, together with the nitrogen atom and the two C atoms linking them, form a 5-membered or 6-membered ring,
B is a linear or branched $C_2$-$C_6$alkylene radical,
W is halogen, $C_1$-$C_4$alkyl or $C_1$-$C_4$alkoxy,
Z is halogen, $C_1$-$C_4$alkyl, $C_1$-$C_4$alkoxy or nitro and
m and n are each 0, 1, 2 or 3.

**15.** A compound of the formula

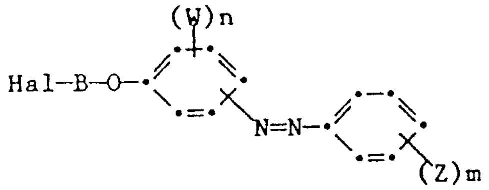

(6)

in which
B is a linear or branched $C_2$-$C_6$alkylene radical,
W is halogen, $C_1$-$C_4$alkyl or $C_1$-$C_4$alkoxy,
Z is halogen, $C_1$-$C_4$alkyl, $C_1$-$C_4$alkoxy or nitro,
Hal is chlorine or bromine and
m and n are each 0, 1, 2 or 3.

**16.** A process for the preparation of compounds of the formula (3) according to claim 14, which comprises reacting a hydroxyazobenzene of the formula

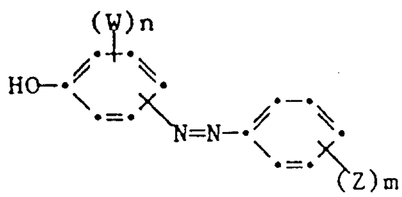

(4)

with a dihalogeno compound

Hal-B-Hal (5)

to give a compound of the formula

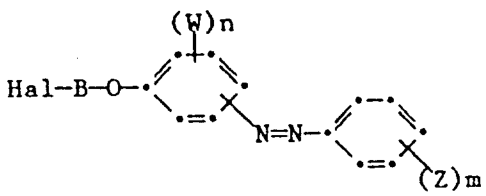

(6)

and then reacting the latter with an aniline derivative of the formula

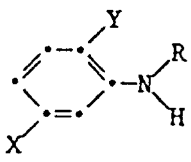

(7)

to give a compound of the formula (3) in which W, Z, X, Y, R, n and m are as defined under the formula

(3) and Hal is chlorine or bromine.

**17.** A process for the preparation of compounds of the formula (6) according to claim 15, which comprises reacting a hydroxyazobenzene of the formula

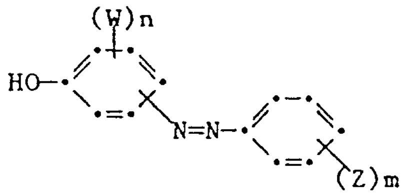

(4)

with a dihalogeno compound

Hal-B-Hal (5).

**18.** The use of a disperse dye according to claim 1 for dyeing or printing semi-synthetic or synthetic hydrophobic fibre material, in particular textile material.

**19.** The use according to claim 18 for dyeing or printing textile material composed of polyester fibres.

**20.** A process for dyeing or printing semi-synthetic or synthetic hydrophobic fibre material, in particular textile material, which comprises applying one or more of the compounds defined in claim 1 to the entire material or incorporating them into this material.

**21.** A process according to claim 20, wherein the hydrophobic fibre material, preferably textile material, consists of polyester fibres.

**22.** The material which has been dyed or printed in accordance with claim 20 or 21.

**Revendications**

**1.** Colorants dispersés de formule :

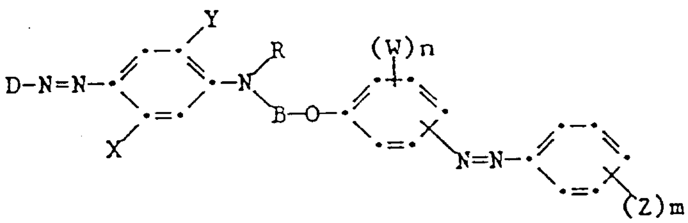

(1)

dans laquelle D représente le reste d'un constituant diazo homocyclique ou hétérocyclique, de la catégorie thiényle, thiazolyle, isothiazolyle, 1,2,4-thiadiazolyle, 1,3,4-thiadiazolyle, benzothiazolyle, benzisothiazolyle, pyrazolyle, imidazolyle ou phényle, ces constituants diazo pouvant être substitués par un ou plusieurs substituants pris parmi les atomes d'halogène et les groupes alkyle en $C_1$ à $C_4$, alcoxy en $C_1$ à $C_4$, alkylthio en $C_1$ à $C_4$, phényle, trifluorométhyle, cyano, nitro, acyle, benzoyle, carboalcoxy, alkylsulfonyle en $C_1$ à $C_4$, phénylsulfonyle, phénoxysulfonyle, sulfonamido et arylazo, 2 substituants voisins des systèmes cycliques indiqués pouvant en outre former ensemble d'autres cycles condensés,
X représente un atome d'hydrogène ou d'halogène, un groupe alkyle en $C_1$ à $C_4$, alcoxy en $C_1$ à $C_4$ ou acylamino, ou un groupe de formule -NH-CO-NHQ, dans laquelle Q représente un atome d'hydrogène ou un groupe alkyle en $C_1$ à $C_4$ ou phényle,
Y représente un atome d'hydrogène ou d'halogène, ou un groupe alkyle en $C_1$ à $C_4$, alcoxy en $C_1$ à $C_4$, alcoxy($C_1$ à $C_4$)alkyle($C_1$ à $C_4$) ou alcoxy($C_1$ à $C_4$)alcoxy($C_1$ à $C_4$),
R représente un atome d'hydrogène ou un groupe alkyle en $C_1$ à $C_{12}$, alcényle en $C_2$ à $C_{12}$ ou phényle,
ou bien Y et R forment ensemble, avec l'atome d'azote et les deux atomes de carbone les reliant, un

cycle à 5 ou 6 chaînons,
B représente un reste alkylène en $C_2$ à $C_6$, à chaîne droite ou ramifiée,
W représente un atome d'halogène ou un groupe alkyle en $C_1$ à $C_4$ ou alcoxy en $C_1$ à $C_4$,
Z représente un atome d'halogène ou un groupe alkyle en $C_1$ à $C_4$, alcoxy en $C_1$ à $C_4$ ou nitro, et
m et n représentent chacun 0, 1, 2 ou 3.

**2.** Colorants selon la revendication 1, pour lesquels D représente un reste thiényle, thiazolyle, isothiazolyle, 1,2,4-thiadiazolyle, 1,3,4-thiadiazolyle, benzothiazolyle, benzisothiazolyle, pyrazolyle, imidazolyle ou phényle, chacun de ces systèmes étant non substitué ou substitué par un ou plusieurs substituants pris parmi les atomes de chlore et de brome et les groupes alkyle en $C_1$ à $C_4$, alcoxy en $C_1$ à $C_4$, alkylthio en $C_1$ à $C_4$, trifluorométhyle, cyano, nitro, acyle, benzoyle, carboalcoxy, alkylsulfonyle en $C_1$ à $C_4$, phénylsulfonyle, sulfonamido et arylazo, deux substituants voisins pouvant en outre former un autre cycle condensé.

**3.** Colorants selon la revendication 2, pour lesquels D représente un reste benzothiazolyle non substitué ou substitué par un ou plusieurs substituants pris parmi l'atome de chlore et les groupes méthyle, méthoxy, méthylsulfonyle et nitro, ou un reste phényle non substitué ou substitué par un ou plusieurs substituants pris parmi les atomes de chlore et de brome et les groupes cyano, méthylsulfonyle, éthylsulfonyle, nitro, formyle, acétyle, benzoyle, carbométhoxy, carboéthoxy, méthoxy, éthoxy et phénylazo.

**4.** Colorants selon la revendication 3, pour lesquels D représente un reste benzothiazolyle non substitué ou substitué par un ou deux atomes de chlore, ou un reste phényle non substitué ou substitué par un ou deux substituants pris parmi l'atome de chlore et les groupes nitro, cyano, méthylsulfonyle, éthylsulfonyle et phénylazo.

**5.** Colorants selon l'une des revendications 1 à 4, pour lesquels X représente un atome d'hydrogène, de chlore ou de brome, ou un groupe méthyle, méthoxy, acétylamino ou uréido.

**6.** Colorants selon l'une des revendications 1 à 5, pour lesquels Y représente un atome d'hydrogène ou de chlore, ou un groupe méthyle, méthoxy, méthoxyéthyle ou méthoxyéthoxy.

**7.** Colorants selon l'une des revendications 1 à 6, pour lesquels R représente un groupe alkyle en $C_1$ à $C_4$, qui est éventuellement substitué par un groupe hydroxy, alcoxy en $C_1$ à $C_4$ ou phényle.

**8.** Colorants selon l'une des revendications 1 à 7, pour lesquels B représente un reste alkylène ayant 2 à 4 atomes de carbone, qui est non substitué ou substitué par un groupe hydroxy.

**9.** Colorants selon l'une des revendications 1 à 8, pour lesquels W représente un atome de chlore ou un groupe méthyle ou méthoxy ou pour lesquels n est égal à zéro.

**10.** Colorants selon l'une des revendications 1 à 9, pour lesquels Z représente un atome de chlore ou un groupe méthyle ou méthoxy ou pour lesquels m est égal à zéro.

**11.** Colorants selon la revendication 1, pour lesquels D représente un reste benzothiazolyle qui est non substitué ou substitué par un ou deux atomes de chlore, ou un reste phényle qui est non substitué ou substitué par un ou deux substituants pris parmi l'atome de chlore et les groupes nitro, cyano, méthylsulfonyle, éthylsulfonyle et phénylazo,
X représente un atome d'hydrogène, de chlore ou de brome, ou un groupe méthyle, méthoxy, acétylamino ou uréido,
Y représente un atome d'hydrogène ou de chlore, ou un groupe méthyle, méthoxy, méthoxyéthyle ou méthoxyéthoxy,
R représente un groupe alkyle en $C_1$ à $C_4$, qui est non substitué ou substitué par un groupe hydroxy, alcoxy en $C_1$ à $C_4$ ou phényle,
B représente un reste alkylène en $C_2$ à $C_4$, qui est non substitué ou substitué par un groupe hydroxy,
W représente un atome de chlore ou un groupe méthoxy ou méthyle,
Z représente un atome de chlore ou un groupe méthyle, méthoxy ou nitro, et
m et n représentent chacun 0 ou 1.

**12.** Colorants selon la revendication 11, pour lesquels X représente un atome d'hydrogène ou de chlore ou un groupe méthyle ou acétylamino, Y représente un atome d'hydrogène, R représente un groupe méthyle, éthyle ou benzyle, B représente un reste éthylène et m et n sont tous deux égaux à zéro.

**13.** Procédé de préparation des colorants de formule (1) selon la revendication 1, **caractérisé** en ce que l'on copule le dérivé diazo d'une amine de formule :

$D\text{-}NH_2$ (2)

avec un composé de formule :

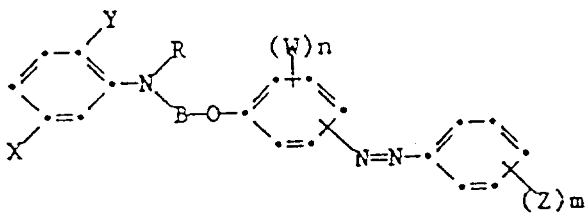

(3)

D, X, Y, R, B, W, Z, m et n ayant dans Tes formules (2) et (3) les significations indiquées à propos de la formule (1).

**14.** Composés de formule :

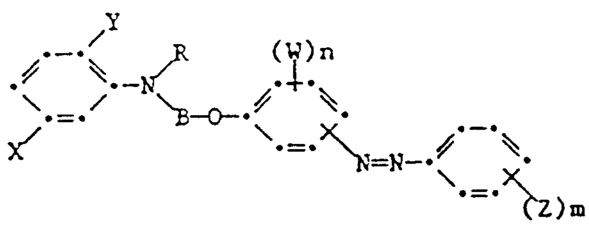

(3)

dans laquelle X représente un atome d'hydrogène ou d'halogène, un groupe alkyle en $C_1$ à $C_4$, alcoxy en $C_1$ à $C_4$ ou acylamino, ou un groupe de formule -NH-CO-NHQ, dans laquelle Q représente un atome d'hydrogène ou un groupe alkyle en $C_1$ à $C_4$ ou phényle,
Y représente un atome d'hydrogène ou d'halogène, ou un groupe alkyle en $C_1$ à $C_4$, alcoxy en $C_1$ à $C_4$, alcoxy($C_1$ à $C_4$)alkyle($C_1$ à $C_4$) ou alcoxy($C_1$ à $C_4$)alcoxy($C_1$ à $C_4$),
R représente un atome d'hydrogène ou un groupe alkyle en $C_1$ à $C_{12}$, alcényle en $C_2$ à $C_{12}$ ou phényle,
ou bien Y et R forment ensemble, avec l'atome d'azote et les deux atomes de carbone les reliant, un cycle à 5 ou 6 chaînons,
B représente un reste alkylène en $C_2$ à $C_6$, à chaîne droite ou ramifiée,
W représente un atome d'halogène ou un groupe alkyle en $C_1$ à $C_4$ ou alcoxy en $C_1$ à $C_4$,
Z représente un atome d'halogène ou un groupe alkyle en $C_1$ à $C_4$, alcoxy en $C_1$ à $C_4$ ou nitro, et
m et n représentent chacun 0, 1, 2 ou 3.

**15.** Composés de formule :

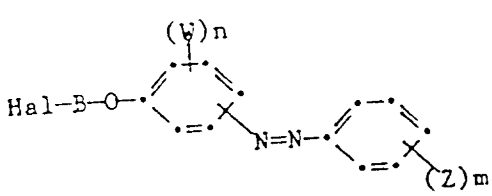

(6)

dans laquelle B représente un reste alkylène en $C_2$ à $C_6$, à chaîne droite ou ramifiée,
W représente un atome d'halogène ou un groupe alkyle en $C_1$ à $C_4$ ou alcoxy en $C_1$ à $C_4$,
Z représente un atome d'halogène ou un groupe alkyle en $C_1$ à $C_4$, alcoxy en $C_1$ à $C_4$ ou nitro,
Hal représente un atome de chlore ou de brome, et
m et n représentent chacun 0, 1, 2 ou 3.

**16.** Procédé de préparation des composés de formule (3) selon la revendication 14, **caractérisé** en ce que l'on fait réagir un hydroxyazobenzène de formule :

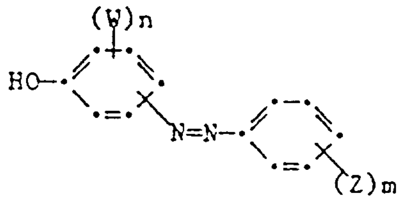

(4)

avec un composé dihalogéné de formule :

Hal-B-Hal (5)

pour obtenir un composé de formule :

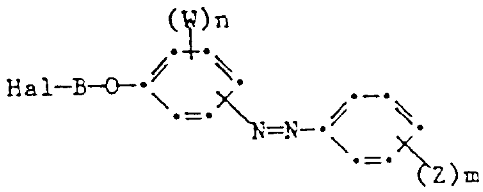

(6)

et fait réagir ensuite ce dernier avec un dérivé d'aniline de formule :

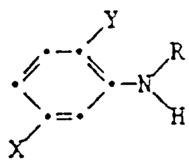

(7)

pour obtenir un composé de formule (3), W, Z, X, Y, R, n et m ayant dans les formules (4) à (7) les significations indiquées à propos de la formule (3) et Hal représentant un atome de chlore ou de brome.

**17.** Procédé de préparation des composés de formule (6) selon la revendication 15, **caractérisé** en ce que l'on fait réagir un hydroxyazobenzène de formule :

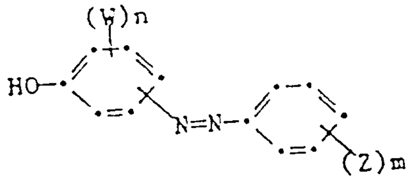

(4)

avec un composé dihalogéné de formule :

Hal-B-Hal (5)

**18.** Utilisation des colorants dispersés selon la revendication 1 pour la teinture ou l'impression de matières fibreuses hydrophobes, semi-synthétiques ou synthétiques, en particulier de matières textiles.

**19.** Utilisation selon la revendication 18, pour la teinture ou l'impression de matières textiles constituées de fibres de polyester.

**20.** Procédé de teinture ou d'impression de matières fibreuses hydrophobes, semi-synthétiques ou synthétiques, en particulier de matières textiles, **caractérisé** en ce que l'on applique sur la totalité de la matière ou incorpore à ladite matière un ou plusieurs des composés définis dans la revendication 1.

**21.** Procédé selon la revendication 20, dans lequel la matière fibreuse hydrophobe, de préférence la matière textile, est constituée de fibres de polyester.

**22.** Matière teinte ou imprimée par le procédé selon la revendication 20 ou 21.